# EUROPEAN PATENT SPECIFICATION

(11) **EP 2 280 465 B1**
(45) Date of publication and mention of the grant of the patent: **26.04.2017**
(21) Application number: 10171014.3
(22) Date of filing: 28.07.2010
(51) Int. Cl.: H02G 3/10, H02G 3/12, H01R 12/67, H01R 12/61

(54) **Cable system**
Kabelsystem
Système de câble

(30) Priority: 31.07.2009 NL 2003322
(43) Date of publication of application: 02.02.2011
(73) Proprietor: ABB B.V., 6716 AA Ede (NL)
(72) Inventor: Kobilsek, Marcus Johannes, 1108 BX, Amsterdam (NL); Renckens, Thomas Philippus, 3742 ND, Baarn (NL); Maljaars, Pieter, 8071 RM, Nunspeet (NL); Kuipers, Johannes Doede Hendrik, 7614 GE, Ede (NL); Van Den Bosch, Julius Martinus Gerardina, 5216 GX, 'S-Hertogenbosch (NL); Simons, Paulus Henricus, 5035 KH, Tilburg (NL); Wijnands, Arnoud Leo, 5612 DP, EINDHOVEN (NL)
(74) Representative: Geurts, Franciscus Antonius

(56) References cited:
- WO-A1-98/45896
- DE-A1- 10 242 448
- DE-U1- 9 317 286
- US-A1- 2008 011 501
- US-A1- 2009 163 074

## Description

### BACKGROUND OF THE INVENTION

The invention relates to an assembly, comprising a cable, a connector that engages onto the cable, a box for electric wirings that carries the connector and a branching conductor connected to the connector, according to the preamble of claim 1. Such an assembly is known from US 2008/0011501 A1.

Aspects of then invention further relate to a cable system, particularly a cable having several conductors and a connector for it.

An example of such a cable is a so-called flexible flat cable having several flexible conductors that extend parallel to each other. The conductors are accommodated in an insulating sheath that keeps the flexible conductors separated from each other. The conductors and the jacket extend in a straight plane. Connectors, so-called Insulation Displacement Connectors that are called IDC connectors in short, can be connected to said cable. In that case the cable is accommodated in the connector at the desired location, wherein conductive clamps or pins of the connector locally cut through the insulation sheath to get into electrically conductive contact.

Flexible flat cables with IDC connectors are for instance used for within an electronic appliance electrically coupling spaced apart printed-circuit boards to each other. The conductors are then used for the electric energy supply as well as the various control currents, wherein the IDC connectors connect to all conductors. However, in for instance buildings or in utility construction with the to Europe typical low-current voltages of monophase 200-240 Volt or two/three-phase 380-400 Volt the use of flexible flat cables is limited (by law) because of the limited conducting cross-section, as a result of which the cable can only have a limited maximum length in practice does not meet the requirements within buildings or utility construction.

It is an object of the invention to provide a flat cable that is particularly suitable for use within buildings or in utility construction.

It is an object of the invention to provide a flat cable that can easily and reliably be connected to an IDC connector suitable for that purpose.

It is an object of the invention to provide a facility of the above-mentioned type that is particularly suitable for use within buildings or in utility construction.

### SUMMARY OF THE INVENTION

The invention provides an assembly according to claim 1.

The box with the connector holder and the connector which is carried by it and freely accessible to the cable form a manageable unit onto which the cable can easily be connected from the outside. It will not be necessary to insert the cable into the first cavity. This renders the assembly suitable for connecting with several assemblies onto the same cable as continuous cable.

In one embodiment the circumferential wall has an installation edge for building up electric switch material on the box, wherein the connector holder is positioned for carrying the connector at the rear side of the box that faces away from the installation edge, as a result of which a safe distance and installation space between the switch material and the connector can be maintained.

In one embodiment on the installation edge switch material is installed that is connected to the branching conductor. The box with connected switch material thus forms a ready-for-use unit onto which only the cable needs to be connected.

In one embodiment with respect to the housing the connector holder is positioned for carrying the connector with the cable holder so as to face away from the installation edge.

In one embodiment with respect to the housing the connector holder is positioned for carrying the connector with the branch connection so as to be oriented towards the first cavity or debouching therein, as a result of which the branch connection can be led over a relatively short distance to the first cavity for further connection.

In one embodiment the connector holder is provided with a frame or box having a second cavity in which the connector is accommodated, wherein the second cavity merges into the first cavity and the branching conductor extends through the first and second cavity. In that way the branching conductor can be fully shielded within the assembly.

In one embodiment the cable carrier at the side facing away from the housing is provided with a substantially straight engagement surface for a pair of pincers onto which one of two opposing jaw members of a pair of pincers can be placed that take the connector between them for squeezing the cable carrier from the first position to the second position, wherein in the first and second position the engagement surface for the pair of pincers and a notional straight continuation thereof extending transverse to the longitudinal direction of the cable extend freely above the boundary of the connector holder. The engagement surface for the pair of pincers and its notional straight continuation transverse to the longitudinal direction of the cable in the first and second position extend freely above the boundary of the connector holder, as a result of which the connector holder is not a hindrance for the jaw member engaging onto the engagement surface for the pair of pincers when connecting the connector to the cable.

In a first practical application the box is designed as a hollow-wall box, wherein the connector extends through an opening in the bottom wall. In a second practical application the box is designed as wall channel box, wherein the assembly furthermore comprises a wall channel in which the wall channel box is accommodated, wherein the connector is positioned within the wall channel and the cable extends through the wall channel.

In a third practical application the box is designed as cable channel box, wherein the assembly further comprises a cable channel to which the cable channel box is attached, wherein the cable channel comprises a bottom wall and two side walls rising up from it, wherein the connector is positioned straight above the bottom wall.

In one embodiment the branching conductor is built up with an insulating sheath of electrically insulating material in which only one singular solid core of electrically conductive material is accommodated, wherein the branch connection comprises an insert contact that is electrically conductively connected to at least one of the electrical contacts and an insertion channel leading to the insert contact, wherein the insertion channel is oriented for guided insertion of the branching conductor to the insert contact in an insertion direction parallel to the notional straight plane of the cable.

The cable is a so-called flat cable of which the first, second and third conductor have a solid core having an optimal conducting cross-section. The three conductors can be used for an earth wire, a neutral wire and 220-240 Volt phase wire, of which by means of the first connector a branch can be made. The flat cable and the branching conductor behave like rigid cables due to the solid cores, wherein due to the insertion direction being parallel to the cable an as regards height compact branch can be effected.

In one embodiment the insertion channel is oriented for guided insertion of the branching conductor with the insertion direction parallel to the longitudinal direction of the cable.

In one embodiment the housing comprises an outer wall extending above the cable in which wall the insertion channel is defined. The branching conductor can be inserted into the insertion channel with visual overview.

In one embodiment thereof the insertion channel is bounded by a slide that is partially recessed in the outer wall and open at the side facing away from the cable. The branching conductor can then be laid into the slide from above in order to be guided.

The slide preferably has a cylindrical bottom shape. Such a shape connects to a round insulating sheath of the branching conductor.

In one embodiment the insertion channel is bounded by a tunnel segment partially extending above the outer wall and defining a passage through the upper wall. The branching conductor can then be guided within the tunnel segment to its end position.

In one embodiment thereof the tunnel segment has a cylindrical inner wall and/or upper wall. Such a shape connects to a round insulating sheath of the branching conductor. Particularly the upper wall then at the outer wall forms point of recognition for the insertion of the branching conductor.

In a combined embodiment in insertion direction the tunnel segment is situated behind the slide.

In particular in the insertion direction the tunnel segment runs into connection with the slide.

An outer end of the branching conductor of which the insulating sheathhas been stripped off can be permanently connected to the connector in one inserting motion when the insert contact is adapted for self-locking engagement to the core of the branching conductor.

In one embodiment the insertion channel of the branch connection considered transverse to the notional straight plane is situated straight above the conductor with which the branch connection is in electrically conductive contact via its electrical contact. In that way the location of the insertion channel provides an immediate visual indication of the conductor with which via said insertion channel contact can be made. This limits the risk of wrong connections.

In one embodiment the connector comprises several branching conductors, for instance one or two for each of the first, second and third conductor, wherein the branching conductors in the insertion direction are mutually staggered in order to simplify the insertion of the branching conductors.

### SHORT DESCRIPTION OF THE DRAWINGS

The invention will be elucidated on the basis of a number of exemplary embodiments shown in the attached drawings, in which:
Figure 1A and 1B show an isometric front view and a cross-section of a first cable in accordance with the invention;
Figures 2A and 2B show an isometric front view and a cross-section of a second cable in accordance with the invention;
Figures 3A-3C show an isometric front view, a cross-section and a top view of a third cable in accordance with the invention;
Figure 3D shows a top view of the third cable in accordance with the invention, having an alternative pattern of holes therein;
Figures 4A and 4B shows an isometric front view and a cross-section of a fourth cable in accordance with the invention;
Figures 5A-5D shows isometric front views of a first connector in accordance with the invention, shown for connection to a fourth flat cable according to figures 4A and 4B, wherein a few parts have consecutively been removed from the connector;
Figure 6 shows an isometric front view of a second connector in accordance with the invention, which is a variant of the first connector according to figures 5A-5D;
Figures 7A and 7B show isometric front views of a third connector in accordance with the invention, shown for connection to the fourth flat cable according to figures 4A and 4B, wherein in figure 7B a few parts have been removed from the connector and a detail is shown in a reference frame;
Figure 8 shows an isometric view of a fourth connector in accordance with the invention, which is a variant of the third connector according to figures 7A and 7B;
Figure 9 shows an isometric view of a fifth connector in accordance with the invention, which is a variant of the third connector according to figures 7A and 7B;
Figure 10 shows an isometric front view of a pair of pincers for connecting the connectors according to the preceding figures;
Figures 11A-11D show two isometric top views, a side view and an isometric rear view of a pre-mounted hollow-wall box with the third connector according to figure 7 to which the third flat cable according to figures 3A and 3B is connected;
Figures 12A-12C show isometric views of a cable channel with holder and a socket outlet connection that are both provided with the first connector according to figures 5A-5C to which the fourth flat cable according to figures 4A and 4B is connected;
Figure 13A shows an isometric front view of a wall channel in which an insert box with socket outlet and the third connector according to figures 7A and 7B is accommodated;
Figures 13B-13E show two isometric front views and two isometric rear views of the insert box according to figure 13A, of which consecutively a number of parts have been removed.

### DETAILED DESCRIPTION OF THE DRAWINGS

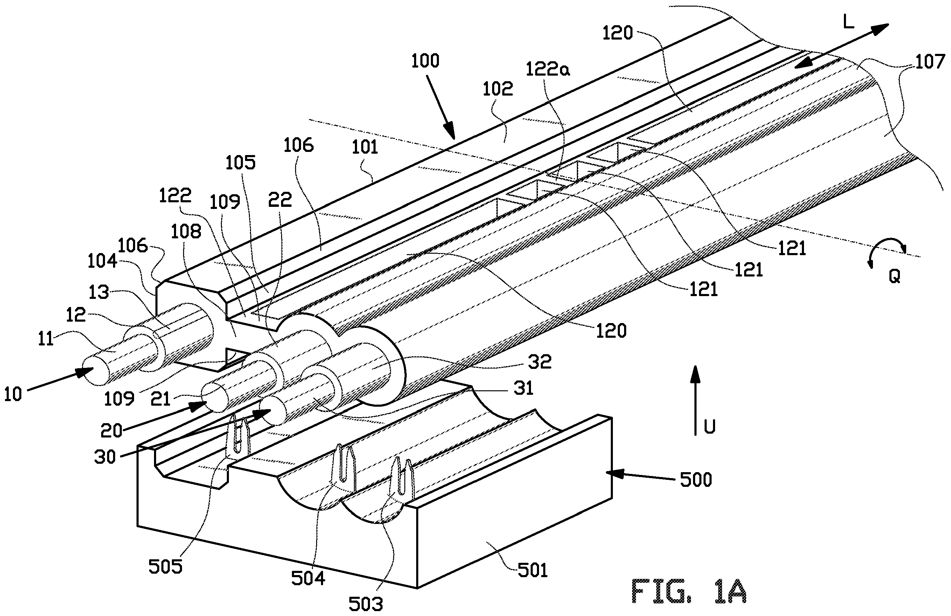

Figures 1A-4B show a first flat cable 100, and a second flat cable 200, a third flat cable 300 and a fourth flat cable 400 in accordance with different embodiments of the invention. In the detailed description below of the cables 100, 200, 300, 400 corresponding parts have the same reference numbers.

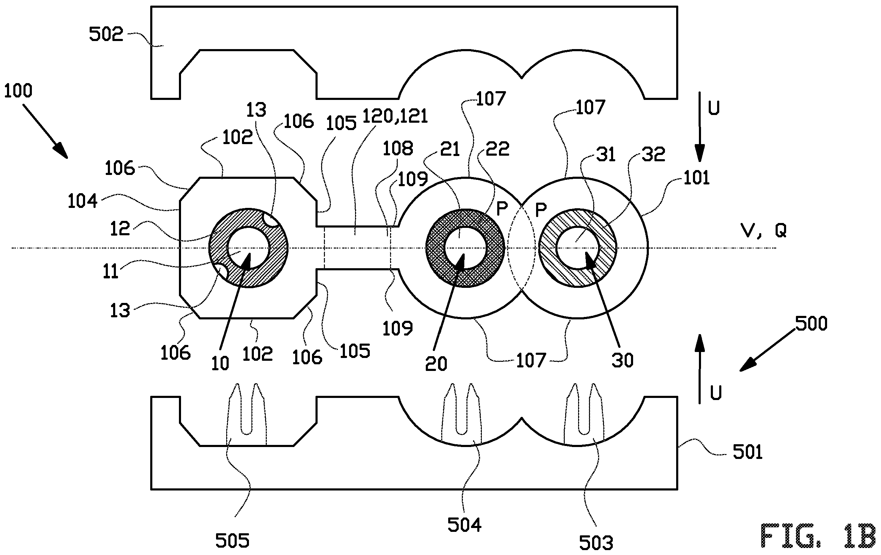

Figures 1A and 1B show the first flat cable 100 in accordance with the invention. The cable 100 is provided with an outer jacket 101 of a flexible synthetic material, having a constant cross-section over its length L. The flat cable 100 is provided with a first electrical conductor 10, a second electrical conductor 20 and a third electrical conductor 30 which are fully enveloped all round by the outer jacket 101. The conductors 10, 20, 30 extend parallel to each other in the middle longitudinal plane and plane of symmetry or middle longitudinal plane V of the flat cable 100.

The conductors 10, 20, 30 each comprise only one singular solid core 11,21,31 having a circular cross-section. The core 11,21,31 is made of electrically conductive metal. The solid core 11, 21, 31 is fully enveloped all round by an insulating sheath 12, 22, 32 also having a circular cross-section. The insulating sheath 12, 22, 32 is made of a flexible, electrically insulating synthetic material.

Around the first conductor 10 the outer jacket 101 in cross-section has an octagonal outer contour, or a quadrangular outer contour of which the corners have a straight bevel, as a result of which the outer jacket 101 at the upper side and the lower side is provided with a straight surface 102 that extends parallel to the plane of symmetry V, a straight end surface 104 and two straight inner surface 105 that extend perpendicular to the plane of symmetry V, and four straight bevelled surface 106 that are at an angle of 45 degrees to the plane of symmetry V.

Around the second conductor 20 and the third conductor 30, the outer jacket 101 has a constant radial thickness, as a result of which circular outer contour sections 107 have been formed, of which between the second and third conductor 20, 30 a notional circular continuation P contacts the adjacent insulation sheath 22, 32.

Between the first conductor 10 and the second conductor 20 the outer jacket 101 is provided with a first straight bridge section 108 having a constant thickness, as a result of which the outer jacket 101 is provided with two straight surfaces 109 that extend parallel to the plane of symmetry V. The thickness of the straight bridge section 108 is substantially equal to the thickness of the cores 11, 21, 31 of the conductors 10, 20, 30 and is smaller than the entire thickness of the outer jacket 101 straight above the conductors 10 20, 30.

The first bridge section 108 comprises a repetitive pattern, extending in the longitudinal direction L, of continuing first holes 120 having substantially the same lengths and mutually substantially the same intermediate distances, as a result of which a repetitive pattern of bridge section segments 122, 122a has been formed also having mutually substantially the same lengths and mutually substantially the same intermediate distances. A fixed number of several successive bridge section segments 122 is succeeded by the bridge section segment 122a that is provided with several continuing second holes 121 and therewith forms a repetitive pattern. The first holes 120 have a rectangular circumference. The holes 120, 121 can be used for securing the cable 100 by means of pins or flat binders wherein the second holes 1 21 show a practical unit of length for the cable 100, for instance one meter. In that way an electrician has a simple aid for cutting the correct length of cable 100 from a supply roll. Alternatively or additionally the cable 100 can be provided with a printed marking of a unit of length, for instance one meter.

The outer jacket 101 is in detached yet abutting contact with the insulating sheaths 12, 22, 32, as a result of which it can be stripped away at an outer end of the cable 100 such that the conductors 10, 20, 30 remain intact. Their insulating sheaths 12, 22, 32 can be stripped away individually to expose the solid conductive core 11, 21, 31, as the insulating sheaths 12, 22, 32 are in detached yet abutting contact with the cores 11, 21, 31 as well.

In this example the outer jacket 101 is made of a polyolefin combined with fire-retardants. In this example the insulating sheaths 12, 22, 32 are made of cross-linked polyethene. For optical distinction the insulating sheaths 12, 22, 32 have been provided with unique colours. The insulating sheath 12 of the first conductor 10 in this example is substantially yellow with green stripes or bands 13 to indicate an earth conductor. The insulating sheath 22 of the second conductor 20 is blue to indicate a neutral conductor, and the insulating sheath 32 of the third conductor 30 is brown to indicate a phase conductor. In this example the solid cores 11, 21, 31 are made of copper, and in this example in cross-section have a surface of 2.5 square millimetres. The first bridge section 108 then ensures sufficient distance from the first conductor 10 used for earthing with respect to the other conductors 20,30.

The colours, cable thicknesses and differences in distance used in this example for the conductors 10, 20, 30 are typical of the use of the cable 100 in monophase 220-240 Volt low-voltage installations, such as in utility construction or machinery. The solid cores 11, 21, 31 then ensures an acceptably low internal resistance of the conductors 10, 20, 30. Due to the symmetry in the upper side and lower side of the cable 100 it is possible to safely accommodate it in a schematically shown Insulation Displacement Connector or IDC connector 500.

The IDC connector 500 is provided with a first clamping part 501 and a second clamping part 502 which in direction U can be placed fittingly against each other, wherein at the side facing the cable 100 the clamping parts 501, 502 are provided with a profile having parallel inlay channels that fittingly connect to the upper and lower side of the cable 100. The first clamping part 501 is in that case per inlay track provided with electrically conductive cutting pins 503, 504, 505 which when accommodating the cable 100 partially cut through the outer jacket 101 and the insulating sheath 12, 22, 32 to come into electrically conductive contact with the respective cores 11, 21, 31. Due to the difference in shape of the outer jacket 101 at the location of the first conductor 10 on the one hand and the second conductor 20 or third conductor 30 on the other hand, or because of the difference in distance between them formed by means of the first bridge section 108, and the symmetry used therein with respect to the middle longitudinal plane V the cable 100 can only be laid in in the position shown and turned around about its latitudinal axis in direction Q, wherein with both inlay possibilities the insert contacts 503, 504, 505 get into contact with the same conductor 10, 20, 30. The differences in shape and height in the latitudinal direction of the outer jacket 101 clearly shows the location of the various conductors 10, 20, 30 from the outside.

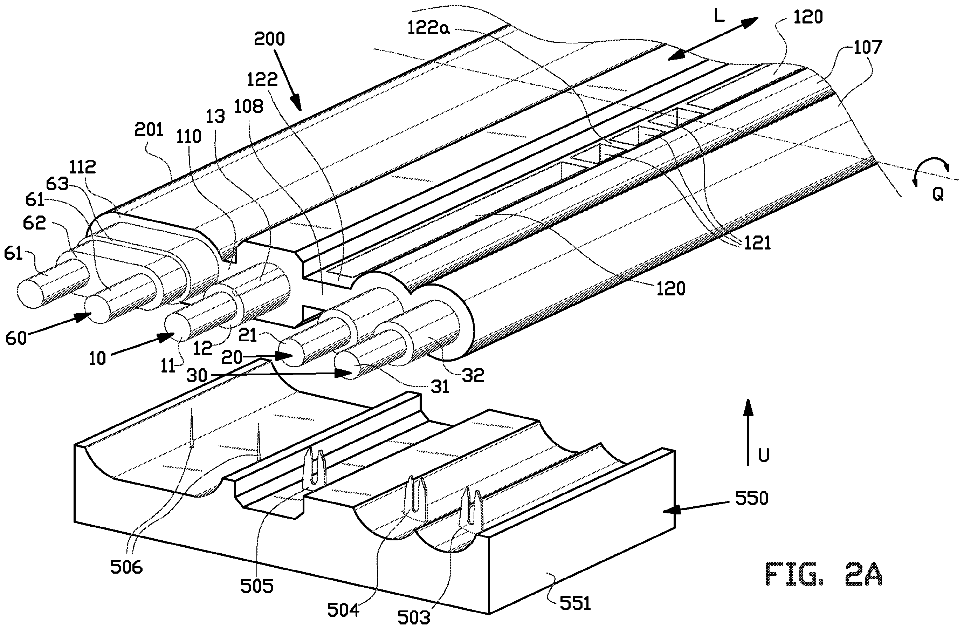

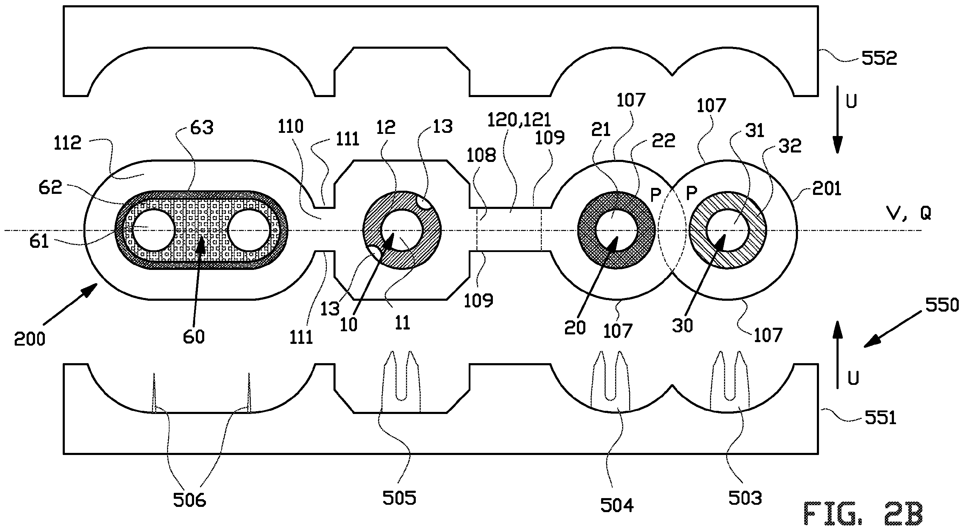

Figures 2A and 2B show the second flat cable 200 in accordance with the invention. With respect to the first cable 100 described above, the outer jacket 201 at the side of the first conductor 10 that faces away from the second and third conductor 20, 30 is provided with a second straight bridge section 110 which at the upper side and the lower side defines a straight surface 111, and an oval-round jacket part 112 in which a twin conductor 60 wrapped in metal foil 63 and having an insulating sheath 62 and two parallel cores 61, has been accommodated. The oval-round jacket part 112 is then built up with two half, circular arches that are oppositely oriented and by means of straight parallel lines are connected to each other. In this example the cores 61 of the twin conductor 60 have a diameter that can be smaller than the first, second and third conductor 10, 20, 30 and can each be formed as singular core or as multiple or entwined core. The twin conductor 60 can for instance be used for electronic bus communication, for instance according to the KNX protocol, using equipment that possibly by means of the first, second and third conductor 10, 20, 30 are provided with earthing and electric power.

The clamping parts 551, 552 of the used IDC connector 550 for that purpose are provided with an extra inlay channel having prick pins 506 of which the electrically conductive outer end cuts into the centre of the cores 61 when clamping the cable 200.

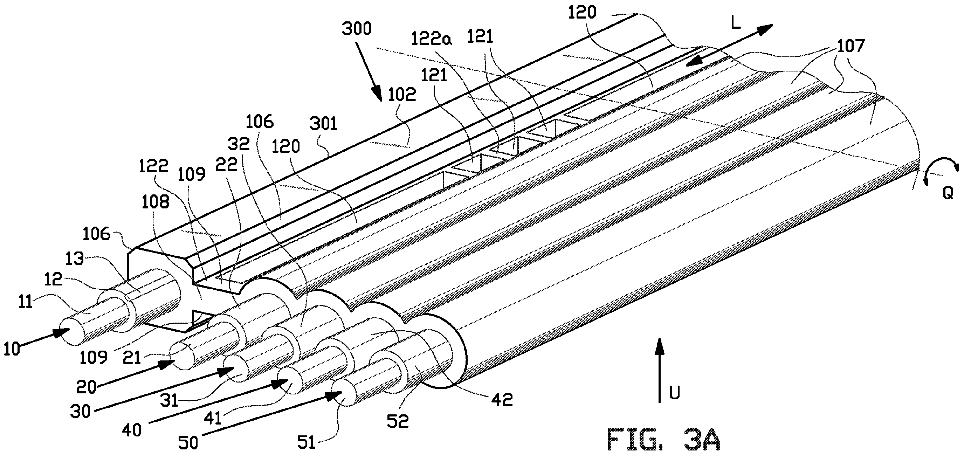

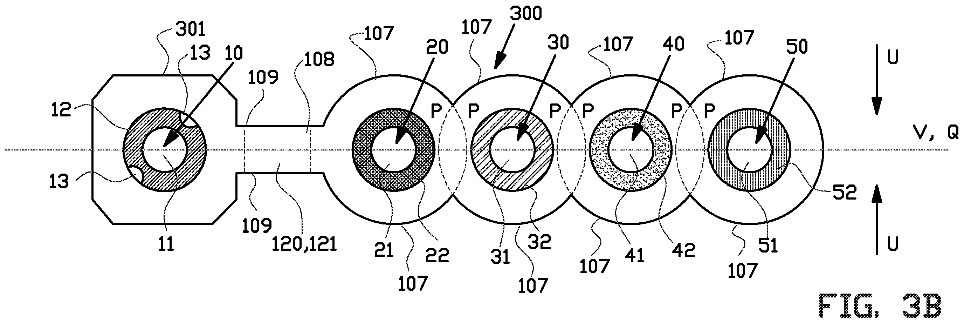

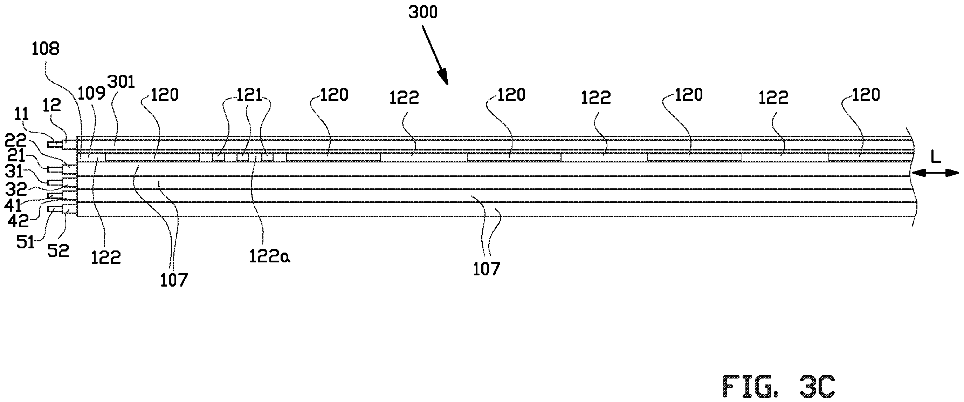

Figure 3A-3C show the third flat cable 300 in accordance with the invention. With respect to the first cable 100 discussed above, the third cable 300 with outer jacket 301 is also provided with a fourth conductor 40 and a fifth conductor 50 which with respect to the first conductor 10, the second conductor 20 or the third conductor 30 only differ in colour of the insulating sheath. In this example the insulating sheath 42 of the fourth conductor 40 is black and the insulating sheath 52 of the fifth conductor 50 is grey. The colours and cable thickness used in this example are typical of the use of the cable 300 in three phase 380-400 Volt low-voltage installations, such as in utility construction or machinery. The colours used in the various embodiments are in accordance with European harmonisation document HD308 and the Dutch NEN1010 standard. Figure 3C shows the third cable 300 in top view, perpendicular to the plane of symmetry V, so that the repetitive pattern of first holes 120 and bridge section segments 122, 122a is visible. In the longitudinal direction the first holes are longer than the bridge section segments 122, 1 22a. In this example the first holes 120 have a width of 2.5 mm and a length of 32.5 mm, the second holes 121 have a width of 2.5 mm and a length of 5 mm. The bridge section segments 122, 122a have a length of 30 mm.

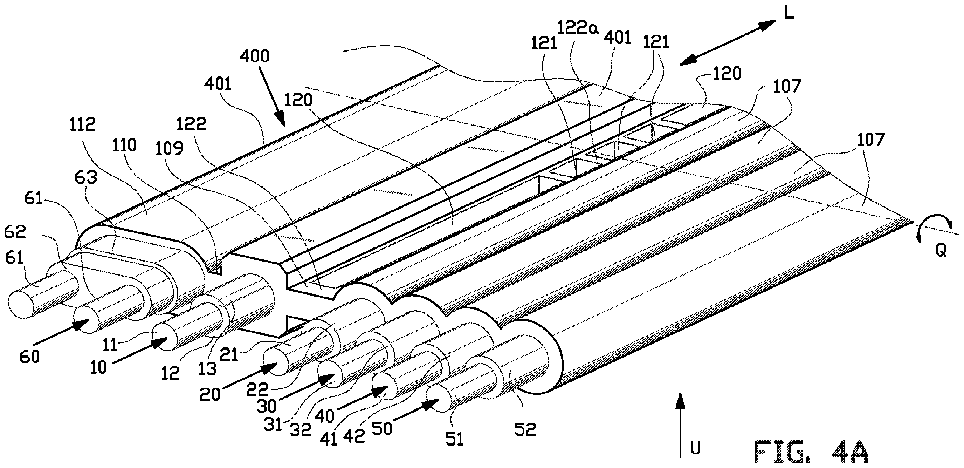

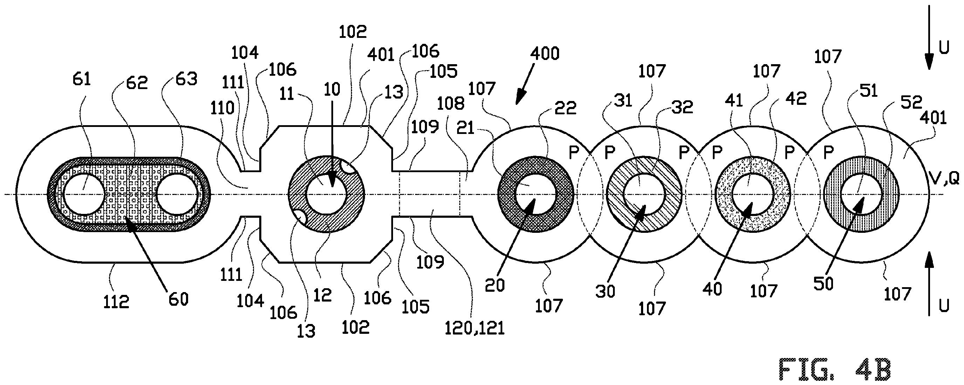

Figures 4A and 4B show the fourth flat cable 400 in accordance with the invention. With respect to the third cable 300 the oval-round jacket part 112 is added to the outer jacket 401 in which jacket part the twin conductor 60 wrapped in metal foil 63 is accommodated for bus communication with equipment that possibly by means of the first, second, third, fourth and fifth conductor 10, 20, 30, 40, 50 are provided with earthing and electric power.

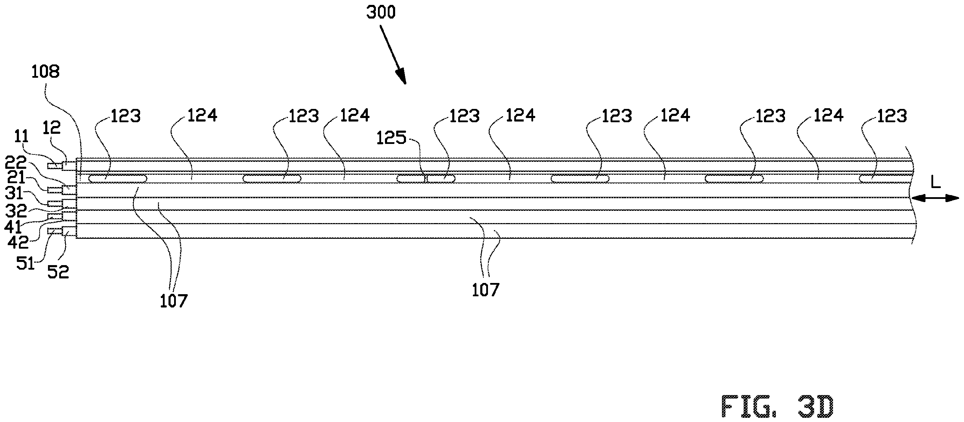

As shown in figures 1A, 2A, 3A and 4A, the first cable 100, the second cable 200, the third cable 300 and the fourth cable 400 are provided with the same repetitive pattern of first holes 120 and bridge section segments 122, 122a. Figure 3D shows the third cable 300 in top view, perpendicular to the plane of symmetry V, so that an alternative pattern is visible that can also be applied to the first cable 100, the second cable 200 and the fourth cable 400. The first bridge section 108 comprises a repetitive pattern of elongated continuing third holes 123 that extend in the longitudinal direction L, which holes have substantially the same lengths and are at substantially the same intermediate distances as a result of which a repetitive pattern of bridge section segments 124 is formed also having substantially the same lengths and at substantially the same intermediate distances one to the other. In longitudinal direction the third holes 123 are shorter than the bridge section segments 124. In this example the third holes 123 have a width of 2.5 mm and a length of 20 mm. The bridge section segments 124 have a length of 30 mm. Therefore the bridge section segments 1 24 jointly cover a length that is at least half, in particular at least 60 percent of the overall length of the third cable 300. Additionally the third holes 123 can be formed like two consecutive partial holes, as a result of which in the middle of said partial third holes 123 a narrower bridge section segment 125 is left as is shown for one of the third holes 123.

The said shape characteristics of the outer jacket are limited to flat cables of which the conductors have a singular solid core. Likewise the conductors may have flexible or multiple bundled or entwined cores.

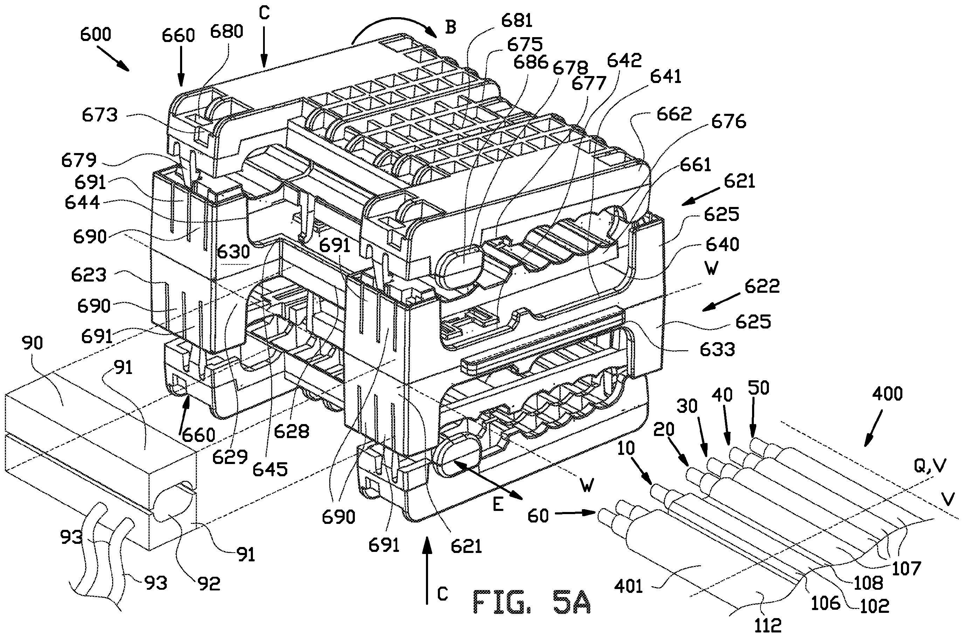

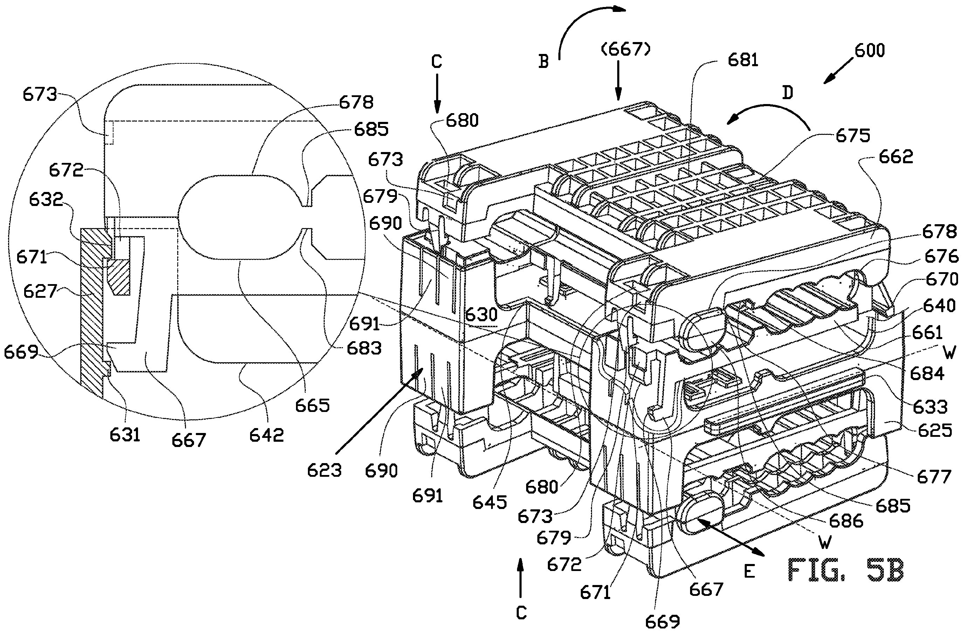

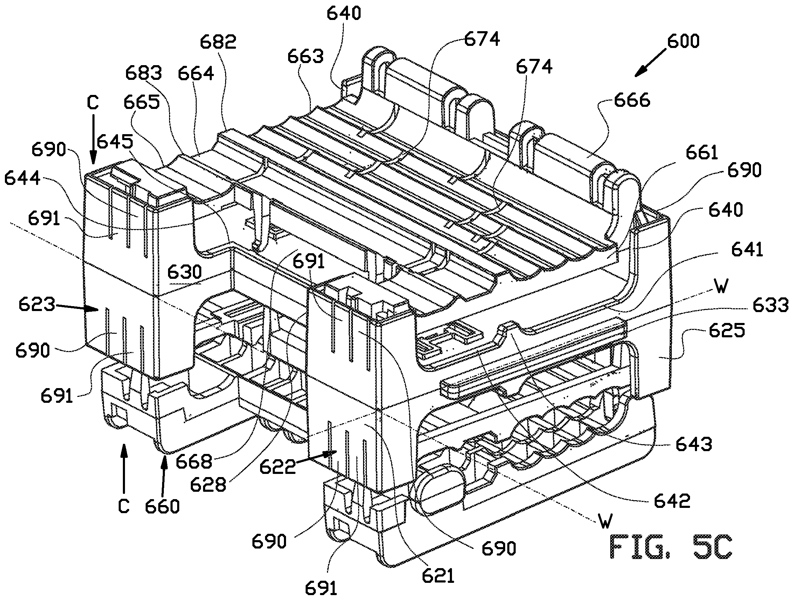

Figure 5A shows the fourth flat cable 400 and a first connector 600 in accordance with the invention to be connected thereto. In figures 5B-5D parts have consecutively been removed from the connector 600. The first connector 600 is built mirror-symmetrical with respect to its middle longitudinal plane W which functionally divides the connector 600 in a top connection 621 and a bottom connection 622, or rotation-symmetrical with respect to a line situated in the middle longitudinal plane W. The corresponding parts of the connections 621, 622 will be elucidated below on the basis of the top connection 621.

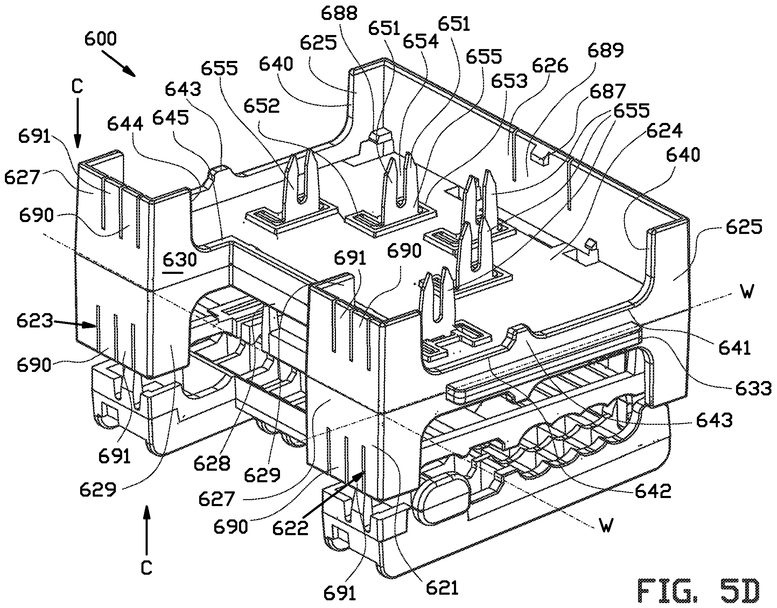

The first connector 600 comprises a synthetic housing 623 which carries two synthetic cable carriers 660. As shown in figure 5D the housing 623 comprises a straight bottom 624 situated in the middle longitudinal plane W and oriented transverse thereto a straight rear wall 626, two straight side walls 625 and two front wall members 627 oriented to each other and connected to the side walls 625, which jointly define a rectangular outer shape of the housing 623. By means of two intermediate walls 629 that extend parallel to the side walls 625, the front wall members 627 are connected to a receded wall 628 that extends parallel to the front wall members 627 for bounding a rectangular insertion framework 630. On either side of the housing 623, the side walls 625 are provided with a projecting, elongated fastening rib 633 that extends through the middle longitudinal plane W.

The side walls 625 are provided with a profiled recess 640 for accommodation of one of the sides of the jacket 401 of the fourth flat cable 400. For that purpose the recess 640 consecutively comprises a first profile section 641 for the four circular jacket segments 107 and a second profile section 642 for the polygonal jacket segment 102, 106 and the oval jacket segment 112. The first profile section 641 and the second profile section 642 are separated from each other by a raised section 643 of the side wall 625 that may fittingly connect to the first bridge section 108 and the sections of the polygonal jacket segment 102, 106 connecting immediately thereto and the circular jacket segment 107. The intermediate walls 629 and the receded wall 628 are provided with a common profiled recess 644 of which the edge 645 considered in the direction of the middle longitudinal plane W, forms a continuation or projection of the second profile section 642.

The housing 623 is provided with a total of five metal cutting contacts 655, divided over the bottom 624, of which contacts the shape is mirror-symmetrical with respect to the middle longitudinal plane W. The cutting contacts 655 comprise a footing 652 that is secured in a passage in the bottom 624, which passage is bounded by a circumferential thickening 643, and on either side of the middle longitudinal plane W two blades 651 positioned upright therefrom that bound a straight insertion slot 654. Considered transverse to the middle longitudinal plane W the blades 651 extend up to the upper edge of the housing 623, where the insertion slot 654 has a widened accommodation end.

As shown in figures 5A-5C the cable carrier 660 comprises a cable inlay part 661 that is positioned fittingly yet moveable in a translatory manner in direction C transverse to the middle longitudinal plane W within the walls 625, 626, 627, 629 of the housing 623. The walls 625, 626, 627, 628, 629 therefore impose the guided translation of the cable inlay part 661 in direction C. A recess 668 is also defined in the inlay part 661, which recess coincides or complies with the inside of the insertion framework 630 of the housing 623. At the side facing away from the housing 623 the cable inlay part 661 is provided with consecutively a hinge half 666, four first straight channel-shaped profile sections 663 that are shaped complementary to the four round jacket segments 107, a straight channel-shaped second profile section 664 that is shaped complementary to the polygonal jacket segment 102, 106 and a third profile section 665 that is shaped complementary to the oval jacket segment 112 of the fourth cable 400. Furthermore straight top surfaces 682, 683 are provided for fitting abutment against the first bridge section 108 and second bridge section 110, respectively. In the profile sections 663, 664, 665 passage slits 674 are provided that coincide with the cutting contacts 655, wherein on either side of the middle longitudinal plane W the insertion slots 654 are situated in the centre of the four first profile sections 663, the second profile section 664 and the third profile section 655, respectively.

As shown in figure 5B, at the side facing the housing 623 at two diagonally opposite vertices, the cable inlay part 661 is provided with a hooked-shaped hold-up device 667 of which the outer end 669 in the shown intermediate position of the connector 600 at the front side supports on an inwardly oriented first cam 631 at the front wall member 627 and at the rear side on an inwardly oriented third cam 688 at the rear wall 626 of the housing 623. The cable inlay part 661 is furthermore provided with two permanent closing cams 670 at the side of the hinge half 666, and at the opposing other side thereof with two closing lips 671 having a first recess 672 in which an inwardly oriented second cam 632 at the front wall member 627 extends. The housing 623 is furthermore provided with an inwardly oriented, central permanent closing cam 687 at the rear wall 626 that is able to engage onto an edge that is formed by a recess that is not further shown, in the cable inlay part 661. The second cams 632 and the central closing cam 687 are formed at bendable breaking lips 689, 690, wherein at the front side adjacent to the breaking lip 690 a same indication lip 691 is provided.

The cable carrier 660 furthermore comprises a closing lid 662 which in the position shown projects substantially above the housing 623. In figures 5A and 5B the closing lid 662 is in the position in which it can easily be opened again. At the side oriented towards the inlay part 661, the closing lid 662 is consecutively provided with a hinge half that is not further shown and that is snapped fixed to the hinge half 666 of the inlay part 661, four straight channel-shaped first profile sections 676 that are shaped complementary to the four round jacket segments 107, a straight channel-shaped second profile section 677 that is shaped complementary to the polygonal jacket segment 102, 106 and a channel-shaped third profile section 678 that is shaped complementary to the oval jacket segment 112 of the fourth cable 400. Access to the third profile section 678 is closed off on both sides by means of cap 686 that can be broken away. Furthermore straight top surfaces 684, 685 are provided for fitting abutment against the first bridge section 108 and the second bridge section 110, respectively. The closing lid 662 is provided with jacket puncturers that are not shown that project from the middle of the profile sections 676, 677, 678 for partially elastically puncturing only the outer jacket 401 without damaging it permanently.

As shown in figure 5B, at the side opposing the hinge half, the closing lid 662 is provided with closing hooks 679 extending adjacent to the closing lips 671, which hooks are able to temporarily engage behind an edge that is not further shown of the inlay part 661. In the closing lid 662 an insertion opening 680 is provided that extends along the closing hooks 679, in which insertion opening for instance a screwdriver can be inserted for temporarily releasing the closing hooks 679 by means of local elastic deformation of the area adjacent to the closing hooks 679. In the extension of the closing lips 671 two second recesses 673 are provided in the corner edges. At the outer side the closing lid 662 is provided with reinforcement ribs 675 which in the middle define a lowered engagement surface 681 for a pair of pincers.

In figure 5A adjacent to the connector 600 a block-shaped branching connector 90 is schematically shown. The branching connector 90 comprises two clamping halves 91 having an internal profile 92 that is shaped complementary to the oval jacket segment 112 of the fourth cable 400, and two prick pins that are not shown of which the electrically conductive outer end is electrically connected to branch cables 93. The branching connector 90 can be fittingly placed in the insertion framework 630.

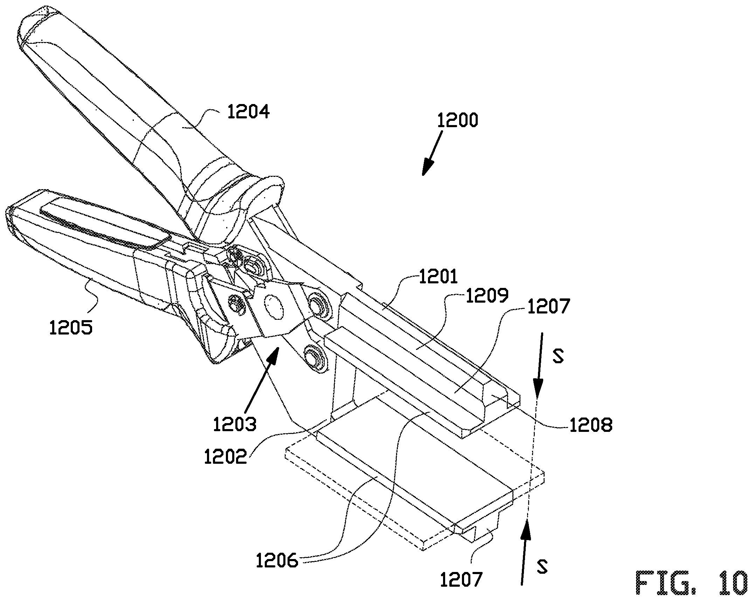

When in a first application connecting the two fourth flat cables 400 to the connector 600, the caps are broken away, the closing lids 662 are swung open in direction B and the cables 400 are laid fittingly from the outside into the profiles 663, 664, 665 of the inlay part 661. Due to the various profile shapes this is only possible in the position shown and in the position in which the cable is rotated 180 degrees about its latitudinal axis Q. The cables 400 now extend parallel to each other and parallel to the middle longitudinal plane V through the connector 600. Subsequently the closing lids 662 are closed in direction D and kept temporarily closed by the closing hooks 679. The electrician can for instance still slide the connector 600 along the cables 400 for securing the correct position and the mutual relation in the work. Subsequently a tool, for instance the pair of pincers 1200 discussed below and shown in figure 10, is placed on the opposing engagement surfaces 681 for a pair of pincers and squeezed together. The cable carriers 660 drop, guided in a translatory manner, in direction C into the housing 623, wherein the hold-up devices 667 move past the first cams 631 of the housing 623, and the second cams 632 come out of the closing lips 671 and drop into the second recesses 673 and the permanent closing cams 670 drop behind an edge at the bottom 624 that is not further shown. The cutting contacts 655 in this case cut through the outer jacket 401 and the insulating sheaths 12, 22, 32, 42, 52 and on both sides envelop the respective core 11, 21, 31, 41, 51 of the conductors 10, 20, 30, 40, 50. In that way electric connections are formed only between conductors 10, 20, 30, 40, 50 that with respect to the longitudinal plane of symmetry W are situated straight opposite each other and above one another. Due to the shape of the second cams 632 that are now operative as permanent closing cams, the central permanent closing cam 687, the second recess 673 and the permanent closing cams 670, the cable carrier 660 can only moved back by being forced or destroyed. The breaking lips 689, 690 will then have be bent outwards to such an extent that they will break off, wherein even the adjacently situated indication lips can break out. As a result the connector 600 will be irreparably destroyed and can no longer be reused. This is clearly visible due to the absence of the breaking lips 689, 690 and the indication lips 691.

After connecting the connector 600 the oval jacket section extends freely within the rectangular insertion framework 630. In the insertion framework 630 the branching connector 90 can be fittingly placed for effecting a partial branch or a through-coupling when this is necessary at the location of the connector 600.

Due to the difference in shape of the outer jacket 401 at the location of the first conductor 10 on the one hand and the second, third, fourth and fifth conductor 20, 30, 40, 50 on the other hand, or because of the difference in distance between the first conductor 10 and the second conductor 20 formed by means of the first intermediate bridge 108, and the symmetry used therein with respect to the middle longitudinal plane V the fourth cable 400 can only be laid in in the position shown and turned around about a latitudinal axis in the direction Q, wherein with both inlay possibilities the cutting contacts 655 in question get into contact with the same conductor 10, 20, 30, 40, 50. The differences in shape and height in the latitudinal direction of the outer jacket 401 clearly shows the location of the various conductors 10, 20, 30, 40, 50 from the outside. The first connector 600 is also suitable for connection to the third cable 300, wherein the caps 686 that can be broken away can remain in place.

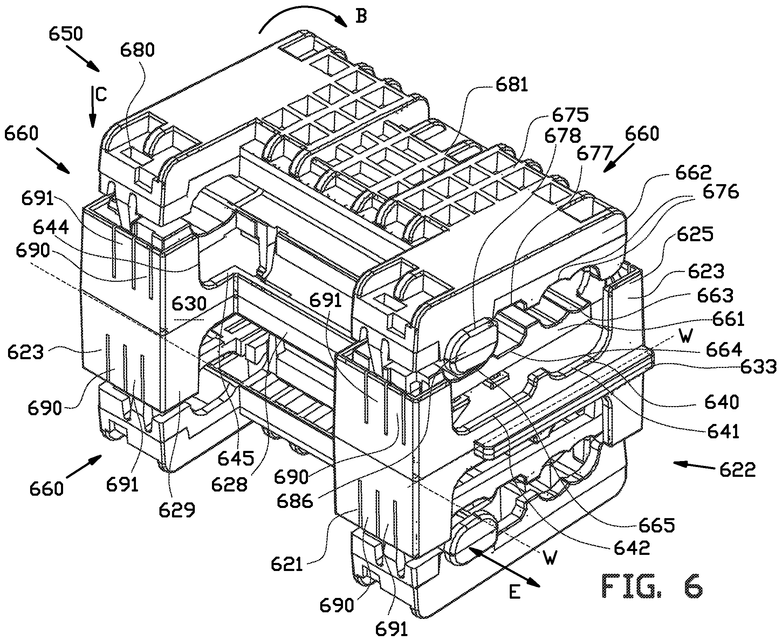

Figure 6 shows the second connector 650 in accordance with the invention, which is a variant of the first connector 600. The second connector 650 is adapted for electrically connecting two first cables 100 or two second cables 200. For that purpose the cable carriers 660 of the cable inlay part 661 comprises two first straight cannel-shaped profile sections 663 that are shaped complementary to the two round jacket segments 107, a straight channel-shaped second profile section 664 that is shaped complementary to the polygonal jacket segment 102, 106 and a third profile section 665 that is shaped complementary to the oval jacket segment 112 of the fourth cable 100. Likewise the closing lid 662 comprises two straight channel-shaped first profile sections 676 that are shaped complementary to the two round jacket segments 107, a straight channel-shaped second profile section 677 that is shaped complementary to the polygonal jacket segment 102, 106 and a channel-shaped third profile section 678 that is shaped complementary to the oval jacket segment 112 of the fourth cable 400. The access to the third profile section 678 is closed off on both sides by means of the cap 686 that can be broken away.

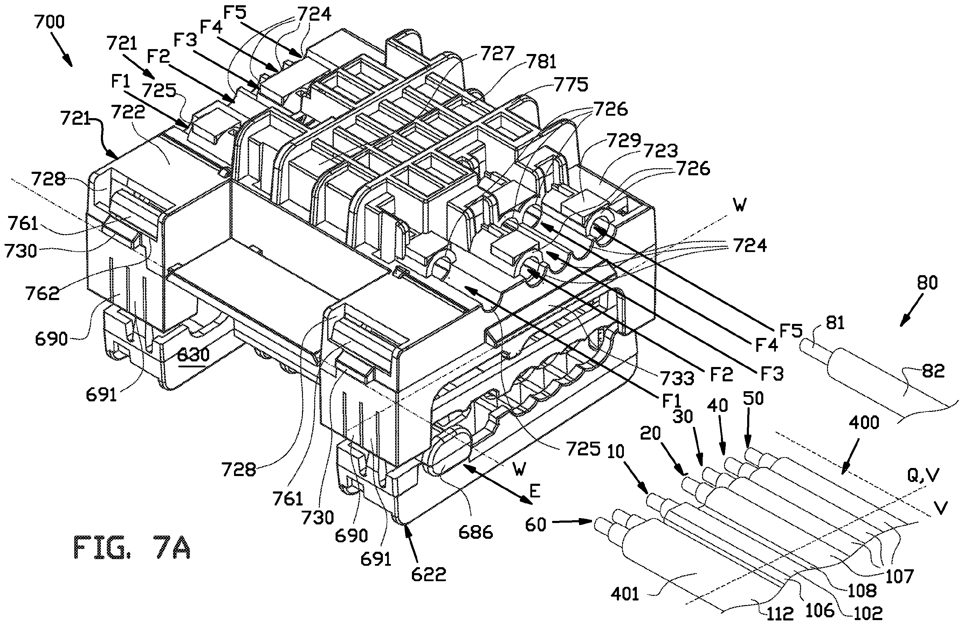

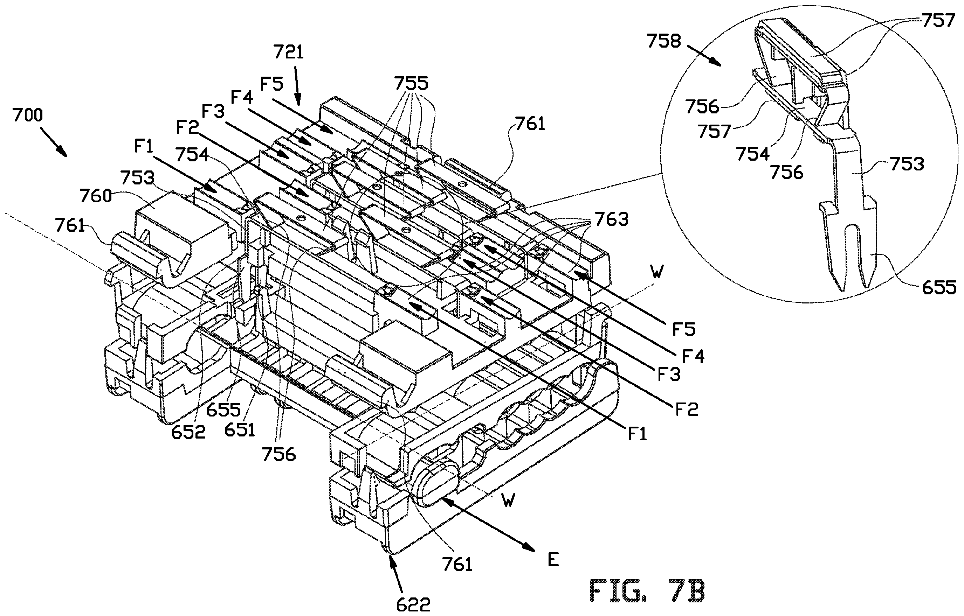

Figures 7A and 7B show the third connector 700 in accordance with the invention, for connection to the fourth flat cable 400. The third connector 700 comprises a bottom connection 622 for flat cables 400 extending in direction E, such as the one near the first connector 600 extending from the middle longitudinal plane W, and a top connection 721 deviating therefrom and to be discussed below in detail.

The top connection 721 comprises a lid 722 of synthetic material having a straight upper wall 723 in which at two opposing sides four first inlay channels 724 with equal intermediate distances and one second inlay channel 725 situated further away from them, are formed. The inlay channels 724, 725 merge into internal cylindrical tunnel walls 726 that extend partially above the main plane of the upper wall 723 and that form a passage to the inside of the top connection 721. At the upper side the tunnel walls 726 are provided with an index surface 729 on which a type indication of the connection can be placed. The tunnel walls 726 in the respective passage directions F1-F5 are mutually staggered in order to create some sideward insertion room and finger room. Between the tunnel walls 726 an elevated middle section 727 is formed under which metal locking springs 755 are attached as shown without the lid 722 in figure 7B. At the upper side the lid 722 is provided with reinforcement ribs 775 which in the middle define a lowered engagement surface 781 for a pair of pincers. At one longitudinal side and at the opposing longitudinal side the lid 722 is provided with two and one engagement opening 728, respectively. The lid 722 is provided on both sides with a projecting, elongated fastening rib 733 which extends parallel to the plane W. At the longitudinal sides at the location of the outer ends the lid 722 is provided with a total of four short fastening ribs 730.

As shown in figure 7B the top connection 721 is furthermore provided with a synthetic inside work 760 having three fastening lips 761 that hook into the engagement openings 728 for permanently coupling the inside work 760 to the lid 722. The inside work 760 is provided with tunnel bottom profiles 763 that extend straight below the tunnel walls 726 for forming an internal cylindrical insertion channel that extends in the passage direction F1-F5. The tunnel bottom profiles 763 are each continued in a strip-shaped metal conductor segment 754 which via a turned shorter conductor segment 753 merges into the cutting contact 655 as discussed above. The locking springs 755 are provided with barbs 756 that are oriented inwardly inclined and are pre-biassed against the long conductor segment 754. The locking springs 755 and the long conductor segment 754 are confined straight above one another in a secured manner between the parallel legs of a metal U-profile 757, wherein the confinement is maintained by the pre-bias in the locking springs 755 pressing on the long conductor segment 754. The U-profile 757 turns the locking springs 755 and the cutting contact 655 attached thereto into one insert piece 758 that can be placed in the inside work 760.

The third connector 700 can be connected with the bottom connection 622 to the fourth flat cable 400 as discussed above. Here the caps 686 that can be broken away need to be broken away. The cores 11, 21, 31, 41, 51 of the flat cable 400 thus get into electrical contact with only one of the long conductor segments 754. A singular conductor 80 having a singular solid core 81 and a synthetic jacket 82 can connected thereto by means of stripping away exposing the core 81 at the outer end of the conductor 80, laying it in one of the inlay channels 724, 725 and pressing it through under the related tunnel wall 726 in the direction F1-F5 parallel to the straight plane and parallel to the longitudinal direction E of the flat cable 400, until the core 81 is situated on the long conductor segment 754, wherein the barb 756 presses the core 81 onto the long conductor segment 754 and by forming a notch in the core 81 blocking a return movement. In that way per conductor 10, 20, 30, 40, 50 of the fourth flat cable 400 one or two electrical branches can be created. The singular conductors are the same or similar to the conductors 10, 20, 30, 40, 50 of the flat cable 400. The third connector 600 is also suitable for connection to the third cable 300, wherein the caps 686 that can be broken away remain in place.

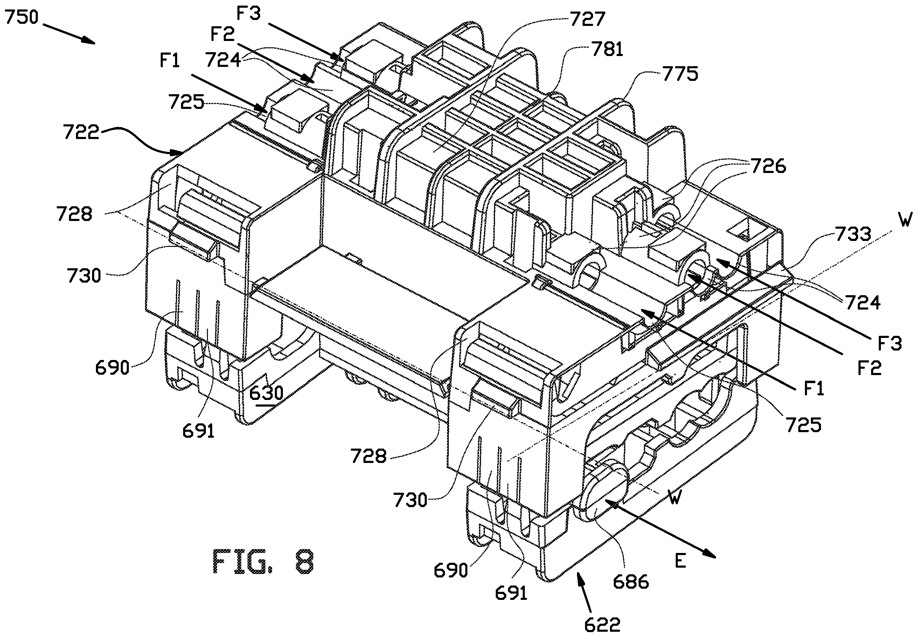

Figure 8 shows a fourth connector 750 in accordance with the invention, which is a first variant of the third connector 700. The fourth connector 750 is adapted for making electric branches from the first cable 100 or the second cable 200. For that purpose the fourth connector 750 comprises a bottom connection 622 such as present in the second connector 650, two first inlay channels 724 and a second inlay channel 725 having parallel passage directions F1-F3.

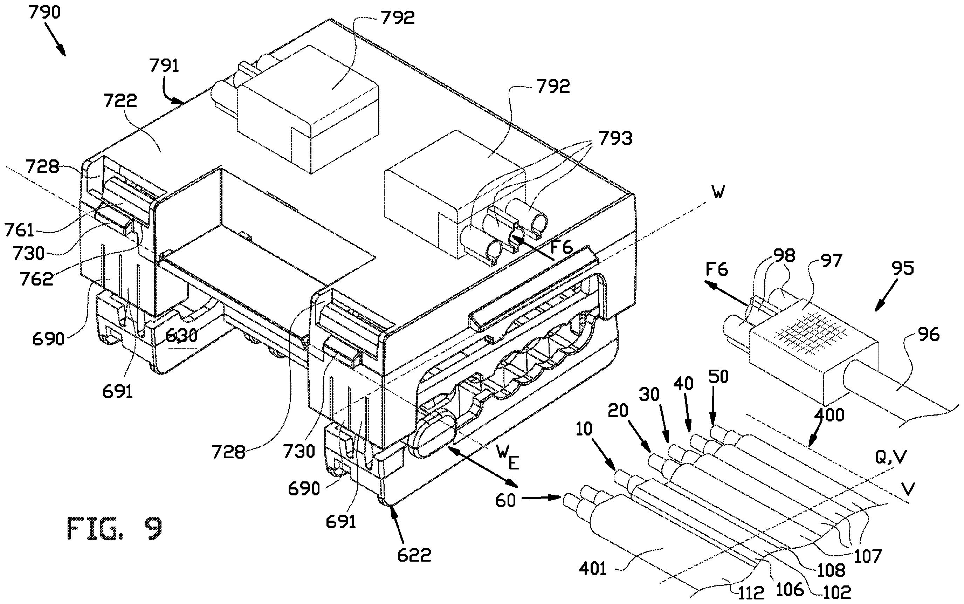

Figure 9 shows a fifth connector 790 in accordance with the invention, which is a variant of the third connector 700. The fifth connector can be connected to the bottom connection 622 to the fourth flat cable 400 as discussed above. The caps 686 that can be broken away, need to be broken away here. The fifth connector 790 comprises a top connection 791 that is provided with in this example two plug connections 792 on the lid 722. The plug connection 792 comprises three insertion bushes 793. The plug connection 792 is adapted for coupling and uncoupling an electric branch line 95. The branch line 95 comprises a three-lead flexible electricity cable 96 having a plug 97 at its outer end, which plug is provided with three insertion bushes 98. The insertion bushes 793, 98 of the plug connection 792 and the branch line 95 have circumferential profiles having complementary shapes as a result of which the plug 97 can only be plugged in in one way in direction F6 in the plug connection 792. The plug 97 and the plug connection 792 are adapted for coupling and uncoupling the plug 97 and the plug connection 792 again several times. The plug 97 and the insertion bushes 793 of the plug connections 792 are known per se for instance under the name of Wieland ST1 8/3S.

It will be clear that the connecting parts of each of the various connectors 600, 650, 700, 750, 790 can in principle be adapted to connect to any one of the various flat cables 100, 200, 300, 400.

Figure 10 shows a pair of pincers 1200 with which the connectors 600, 650, 700, 750, 790 can be squeezed together in order to be connected to the cables 100, 200, 300, 400. The pair of pincers 1200 has an upper jaw member 1201, a lower jaw member 1202, two handles 1204, 1205 and a transfer mechanism 1203 that is adapted for parallel translation of the upper jaw member 1201 with respect to the lower jaw member 1202 in direction S. The jaw members 1201, 1202 are both provided with a straight clenching plate 1206 and a slimmer back 1207. At the insertion side the backs 1207 are provided with a pre-bevel 1208 and along both sides with a side bevel 1209. In the embodiment shown the upper jaw member 1 201 and the lower jaw member 1202 are equally large. In an alternative embodiment, as shown with interrupted lines, the clenching plate 1206 of the lower jaw member 1202 is at least twice as wide, so that the connector 600, 650, 700, 750, 790 in question can be engaged over its full length as described below.

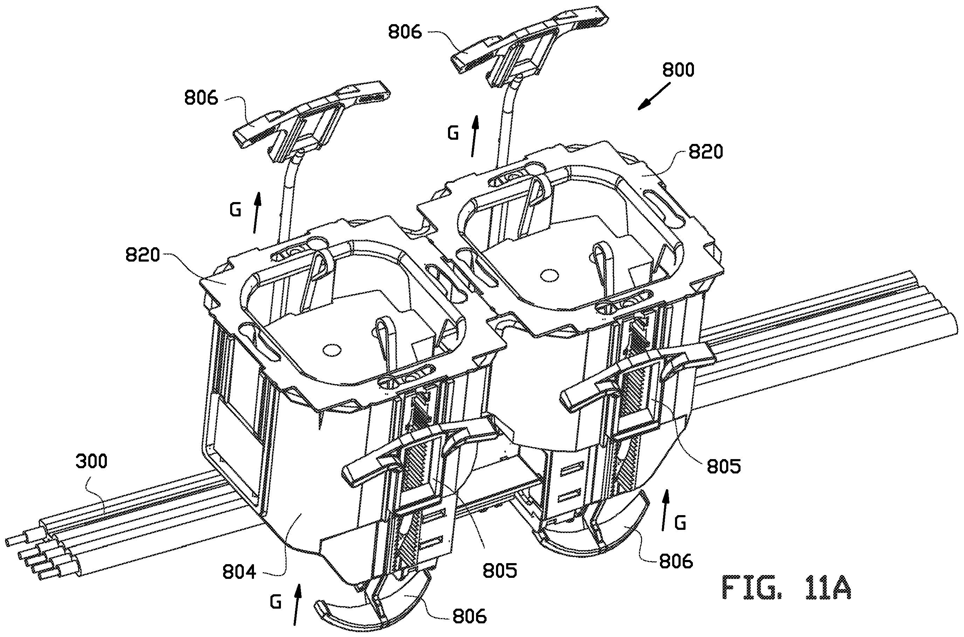

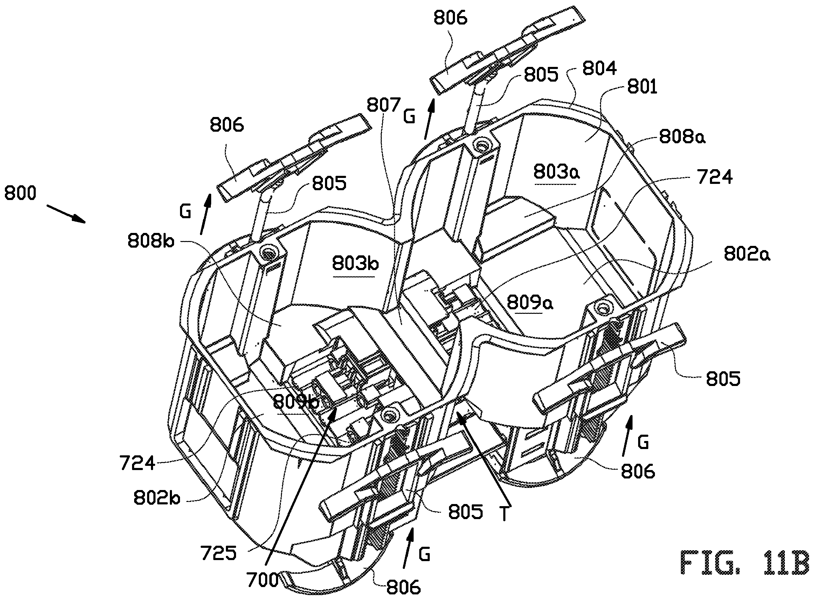

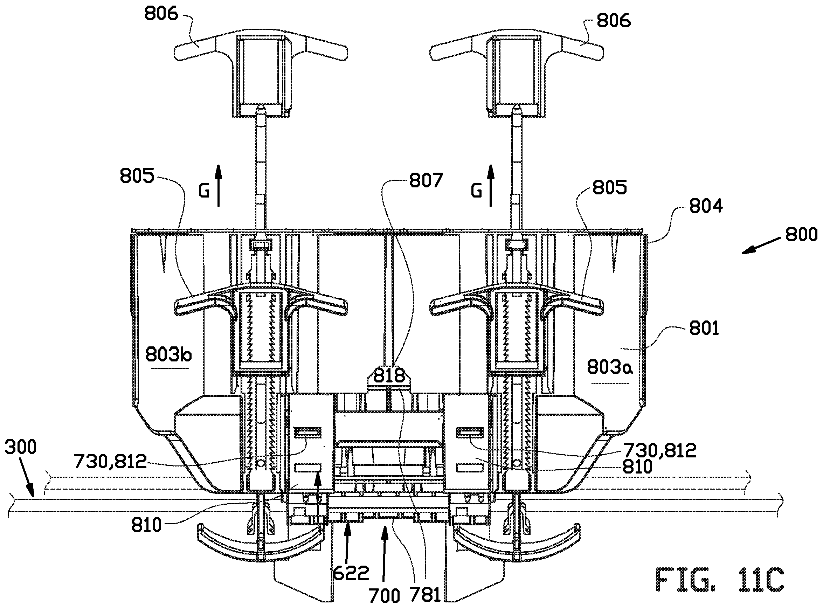

Figures 11A-11D show an application of the third connector 700. Figures 11B and 11C show a synthetic hollow-wall box 800 comprising a circumferential wall 801 provided with a circumferential edge 804 and two bottom members 802a, 802b that bound two build-in spaces 803a, 803b that partially merge into each other. The circumferential edge 804 forms an installation edge for building up switch material, in this example two socket outlets 820. The hollow-wall box 800 thus is a composite or multiple hollow-wall box. On both sides of the two build-in spaces 803a, 803b the circumferential wall 801 is provided with tension rods 805 known per se having anchoring plates 806 which can be pulled up manually in direction G only. The hollow-wall box 800 is suitable to be built in into a hollow wall, for instance in a plaster board wall, wherein the hollow-wall box 800 is inserted fittingly in a similarly shaped hole in the plaster board. The circumferential edge 804 then touches the front surface of the plaster board, after which after pulling the tension rods 805 in the direction G the anchoring plates 806 contact the rear surface in order to fixate the position of the hollow-wall box.

As shown in figure 11B at the bottom side on both sides the hollow-wall box 800 comprises an elevated wall 808a, 808b that is situated parallel to and higher than the bottom wall 802a, 802b to which it is adjacent, and a bridge wall 807 that is situated higher than the elevated walls 808a, 808b. The bridge wall 807 extends in the middle of the hollow-wall box 800. The bridge wall 807, the elevated walls 808a, 808b and the bottom walls 802a, 802b in the middle of any build-in space 803a, 803b bound a passage opening 809a, 809b. Under the bridge wall 807 the third connector 700 is secured, such that the first inlay channels 724 and the second inlay channel 725 on both sides of the third connector 700 are visible and accessible from the upper side via the passage openings 809a, 809b.

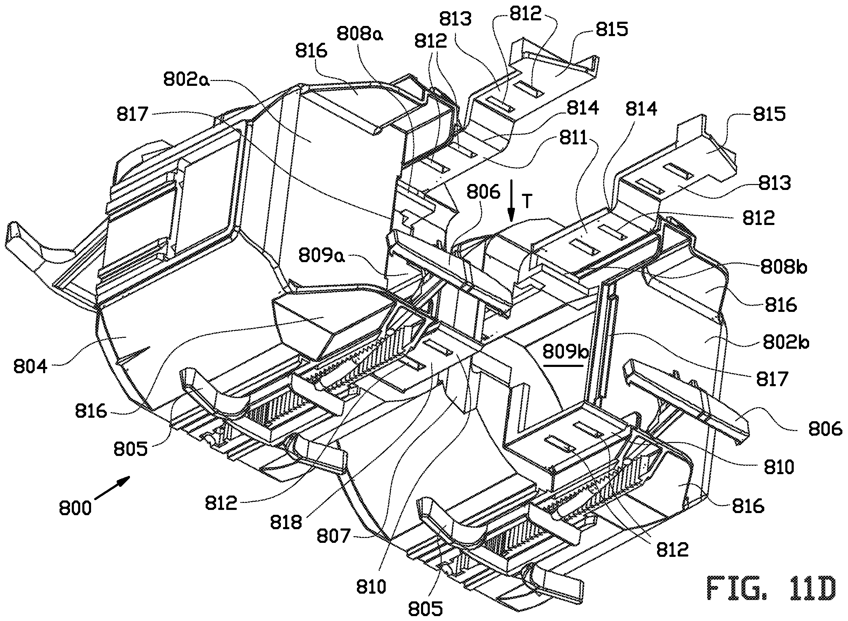

Figure 11C shows the position of the third connector 700 in side view. Figure 11D in an isometric way shows the space in which the third connector 700 is accommodated. Here it can be seen that at the bottom side the hollow-wall box 800 is provided with two first confining walls 810 and two second confining walls 811 that are positioned straight opposite each other. The confining walls 810, 811 are each provided with two long-holes 812 in which four short fastening ribs 730 of the third connector 700 are inserted. The long fastening ribs 733 then are situated in a lowered edge 817 in the bottom walls 802a, 802b.

At the bottom side the hollow-wall box 800 is provided with reinforcement walls 816 in which the guiding of the tension rods 805 is formed and which border the confining walls 810, 811. The bottom connection 622 of the third connector 700 in the opened condition projects above the reinforcement walls 816. The bridge wall 807 is hollow at the lower side facing the third connector 700 and forms a continuing insertion channel 818 therewith that is accessible from aside the hollow-wall box and that extends above and over the lowered engagement surface 781 for a pair of pincers. The insertion channel 818 extends at the location of the transition between the distinctive build-in spaces 803a, 803b, that means where the circumferential wall 801 defines a narrowing of the hollow-wall box 800. At the outer side of the hollow-wall box 800 the insertion channel 818 ends in the circumferential wall 820. The insertion channel 818 extends parallel to the installation surface defined by the circumferential edge 804, transverse to the longitudinal direction of the cable 300.

The insertion channel 818 and the jaw members 1201, 1202 of the pair of pincers 1200, or in the alternative embodiment only the upper jaw member 1201 of the pair of pincers, in cross-section transverse to the insertion direction T have a similarly shaped contour, as a result of which the jaw member 1201 can only be inserted into the insertion channel 818 in an orientation in which the opposing jaw member 1202 ends up straight above the engagement surface 681 of the pair of pincers which surface freely extends at the rear side.

At the outer end the second confining walls 811 are provided with an L-shaped adapter piece 813 that is also provided with two long-holes 812. By means of a living hinge 814, the adapter piece 813 is connected to the second confining wall 811, and at the opposite outer end a supplementary part 815 is formed. The adapter piece 813 can be folded down in direction H for getting parallel to and spaced apart from the second confining wall 811, wherein the supplementary part 815 comes to abut the elevated wall 808a, 808b for forming a copy of a part thereof. The adapter piece 813 thus renders it possible for the narrower, fourth connector 750 to be accommodated in the hollow-wall box 800.

As shown in figure 11A two socket outlets 820 can be secured to the hollow-wall box 800, in this example so-called "Schuko" socket outlets. The socket outlets 820 with conductors 80 having a singular core 81, as shown in figure 7A, are connected to the top connection 721 of the third connector 700. The hollow-wall box with the third connector 700 and the already connected and pre-mounted socket outlets 820 form one pre-assembled unit on which in the work for instance the third flat cable 300 can be connected such as shown in figure 11A. In that case the third flat cable 300 is placed in the connector 700 and the connector 700 is closed as shown in figure 11C, after which the pair of pincers 1200 with the upper jaw member 1201 is fittingly inserted in direction T through the insertion channel 818 for ending up on the engagement surface 781 for a pair of pincers of the third connector 700 and which faces the insertion channel 818. The lower jaw member 1202 that engages onto the engagement surface 681 for the pair of pincers that is situated at the outside can then beyond the engagement surface 681 for a pair of pincers move unimpeded in direction S until the cable carrier 660 of the connector 700 has been brought in the permanent closing position. After squeezing the third connector 700 together the third flat cable 300 has the final position which is shown in figure 11C with interrupted lines. The third flat cable 300 is then situated between and within the reinforcement walls 816. In that way several hollow-wall boxes 800 can be connected to the same continuous cable 300.

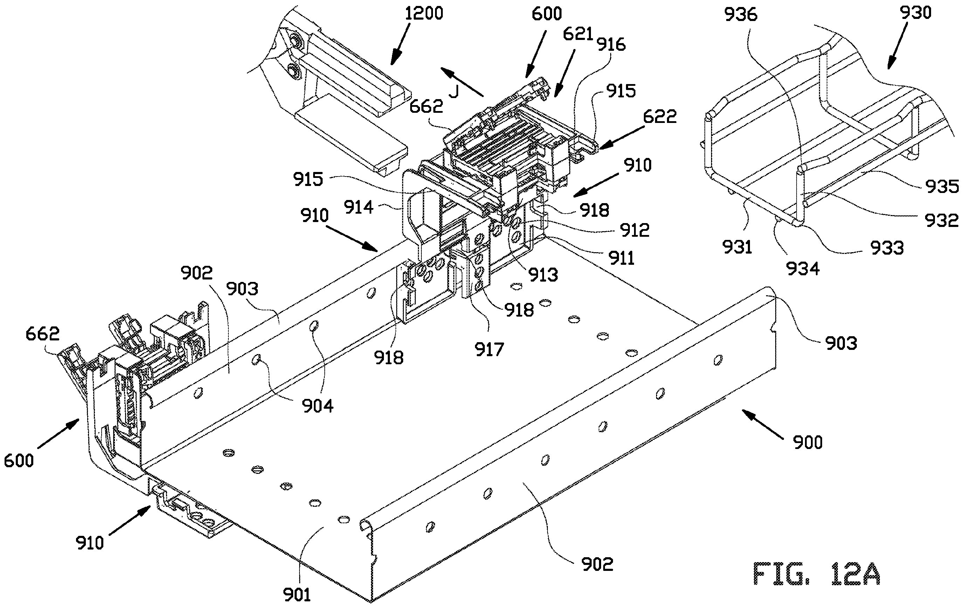

Figures 12A-12C show applications of the first connector 600 and the third connector 700, related to a cable channel 900 and a wire channel 930. The shown metal cable channel 900 comprises a bottom wall 901 and two side walls 902 rising upright therefrom that have been provided with an inwardly oriented bead edge 903 and a series of fixing holes 904. The metal wire channel 930 comprises a bottom 931 and two side walls 932 that are formed with turned transverse wires or bars 933 to which bottom wires 934 and side wires 935, 936 that extend parallel have been secured.

Figure 12A shows two synthetic connector holders 910 in which a first connector 600 is secured. The connector holders 910 comprise a footing 911 that fits between the bottom wall 901 and the bead edge 903, wherein the footing 911 has several holes 912 that may coincide with the fixing holes 904 of the cable channel 900 for being attached against it by means of drive rivets that are not further shown, a middle section 913 that may extend over the bead edge 903, two spaced apart supports 914 which in that case are positioned upright above the bead edge 903, and two attachment claws 915 oriented transverse thereto which at the sides oriented towards each other are provided with an insertion slot 916 for accommodation of the elongated fastening ribs 633 of the first connector 600 in direction J. The connector holders 910 can in the same manner be secured to the shown wire channel 930. For that purpose the footing 911 comprises a central hook 917 to be placed over the middle side wire 935 and three openings 918 in a row in the sides and above the central hook 917 for accommodating the upper side wire 936.

Figure 12A shows two attachment positions of the connector holder 910 with respect to the cable channel 900. In the first position shown the footing 911 is secured against the inside of the side wall 902, as a result of which the connector is held straight above and considered in vertical projection within the cable channel 900 with the middle longitudinal plane V parallel to the plane of the bottom wall 901. Said position makes it possible to lift a flat cable, for instance the third flat cable 300, straight upwards from the cable channel 900 and connect it to the bottom connection 622. By means of the top connection 621 with the same flat cable a branch can be made that is also held straight above the cable channel 900. Said position offers a clear view and the possibility to provide the flat cable with a properly visible marking, for instance a sticker with an indication of the electricity group to which the cable belongs.

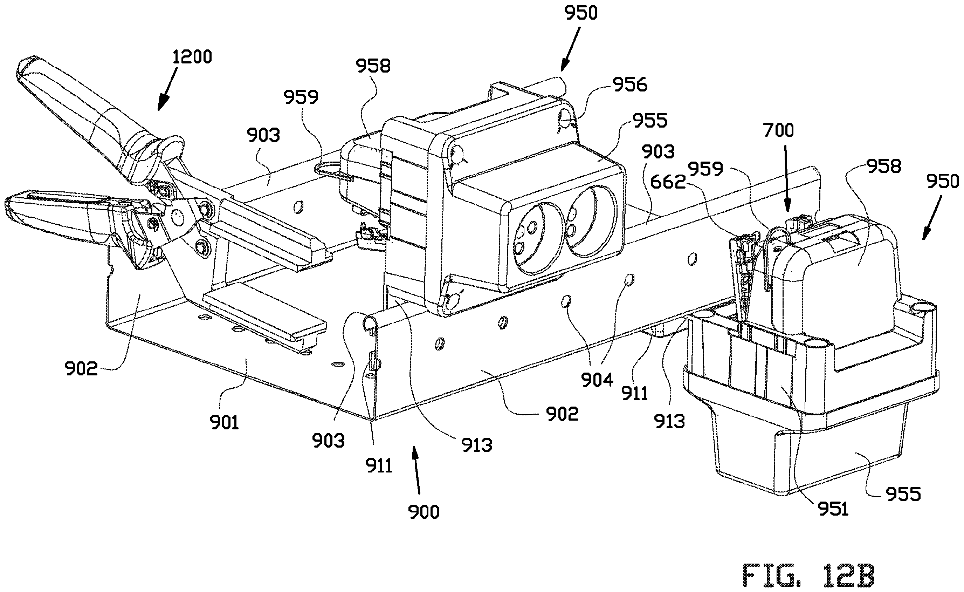

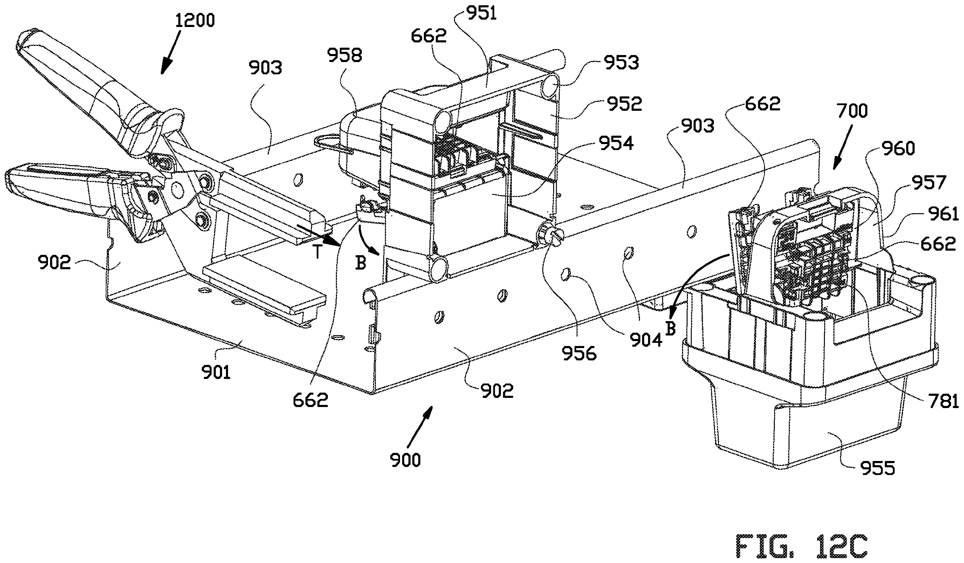

Figures 12B and 12C show two synthetic cable boxes 950 in which the third connector 700 is secured. The cable boxes 950 comprise the footing 911 and the middle section 913 as described above, and a rectangular housing 951 connected to the middle section 913. The housing 951 comprises a straight bottom wall 954 and four straight side walls 952 which in the corners are provided with fixing bushes 953. At the front the cable boxes 950 are provided with a lid 955 known per se having a socket outlet, in this example a double "Schuko" socket outlet. At its corners the lid 955 is provided with quarter-turn closures 956 with which the lid is secured to the housing 951. At the rear side the cable boxes 950 are provided with a box-shaped connector holder 957 that projects from the bottom wall 954 of the rectangular box 951. The connector holder 957 is hollow on the inside, wherein via an opening in the bottom wall 954 the inner space merges into the inside of the housing 951. At the upper side facing away from the footing 911 the connector holder 957 is closed off with a detachable lid 958 which by means of a flexible coupling 959 in the detached condition also remains connected to the connector holder 957. At the bottom side facing the footing 911 the connector holder 957 is provided with a recess 960 in which the third connector 700 is accommodated.

The third connector 700 is secured by means of its four short fastening ribs 730 that are snapped fixed into long holes that are not shown. The third connector 700 then with its bottom connection 622 freely extends below the connector holder 957, wherein the closing lid 662 is able to swing open in direction B in the direction of the footing 911 for accommodating the third flat cable 300. The engagement surface 781 for the pair of pincers extends above the upper edge 961 of the opened connector holder 957. The socket outlets of the lid 955 with conductors 80 having a singular core 81 as shown in figure 7A are connected to top connection 721 of the third connector 700. The cable box 950 with the third connector 700 and the lid 955 of which the socket outlets are already connected form one pre-assembled unit that can be secured in the work on the cable channel 900 and can be connected to the third flat cable 300 in the cable channel 900 by laying the third flat cable 300 in the third connector 700 squeezing the third connector 700 together using the pair of pincers 1200, wherein the lower jaw member 1202 that engages onto the engagement surface 681 for the pair of pincers that is situated at the outside, is able to move unimpeded in direction S until the cable holder 660 of the connector 700 has been brought in the permanent closing position. Finally the detachable lid 958 is placed back. In this way several cable boxes 950 can be connected to the flat cable 300.

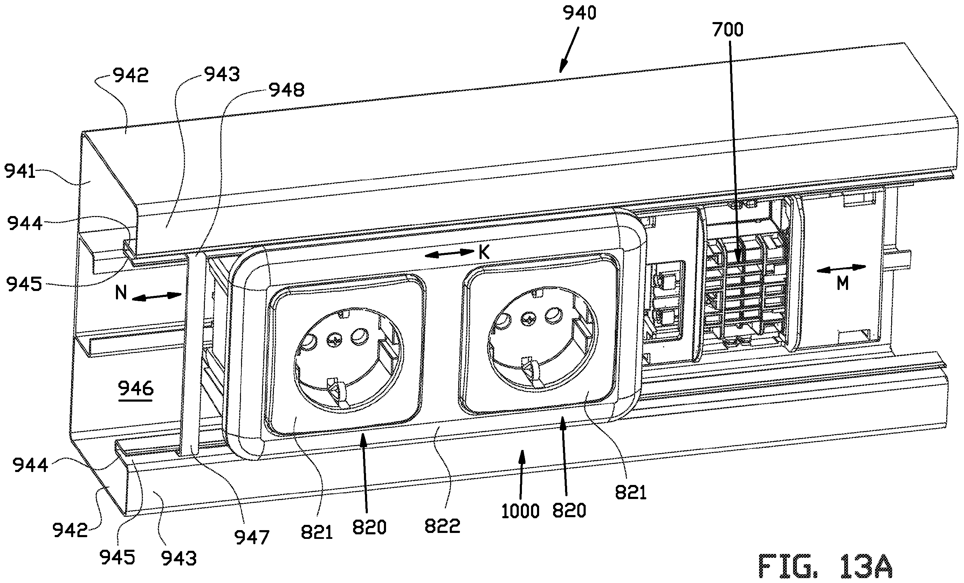

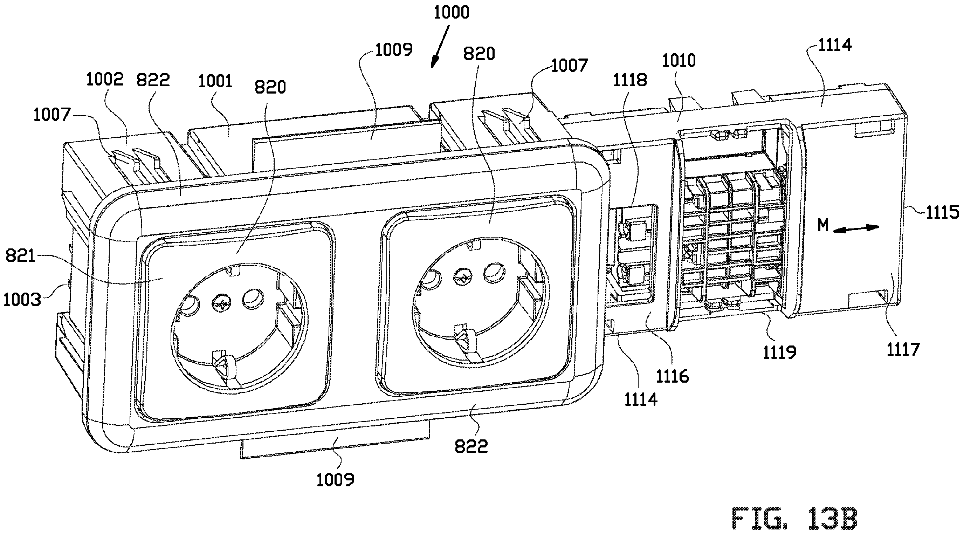

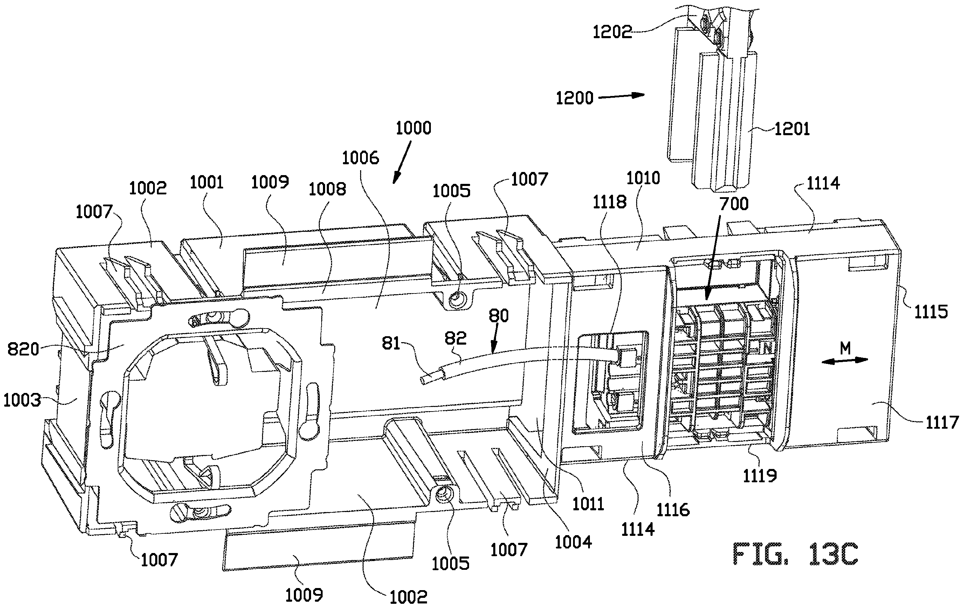

Figures 13A-13E show a use of the third connector 700. Figure 13A shows a metal wall channel 940 known per se for attachment against a wall that is not further shown. The wall channel 940 comprises an elongated bottom wall 941, two side walls 942 oriented transverse thereto and two front walls 943 oriented towards each other that leave an elongated installation opening 946 free. The front walls 943 at the side of the installation opening 946 are provided with a U-profile 944 having an insertion slot 945 accessible from the front side. The installation opening 946 can be covered by a channel lid 947 which at the outer ends is provided with a turned edge 948 that is clamped fixed in the insertion slots 945.

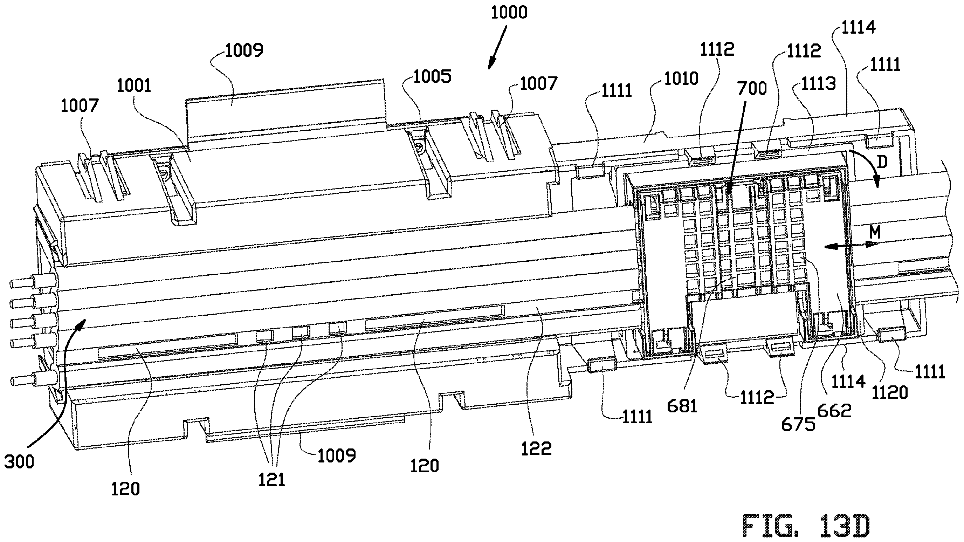

In the wall channel 940 a synthetic wall channel box 1000 is secured that is further shown in figures 13D-13E. The wall channel box 1000 comprises a first elongated rectangular housing 1001 having an elongated bottom wall 1006, two elongated side walls 1002, a left side wall 1003 and a right side wall 1004. At the front side the elongated side walls 1002 are provided with an abutment wall 1008 to which a bendable insert flap 1009 is formed which can be inserted into the insertion slot 945, and on both sides thereof barbs 1007 are formed which engage behind the U-profiles 944. At the inside of the elongated side walls 1002 threaded bushes 1005 are formed with which in this example two of said "Schuko" socket outlets 820 have been secured onto the housing 1001. The socket outlets 820 are finished with top pieces 821 and a common framework 822. In the placed condition the wall channel box 1000 can be shifted in direction K in order to be placed in the wanted position in the work. Likewise the channel lid 947 can be shifted in direction N parallel thereto in order to come to a consecutively abutting whole.

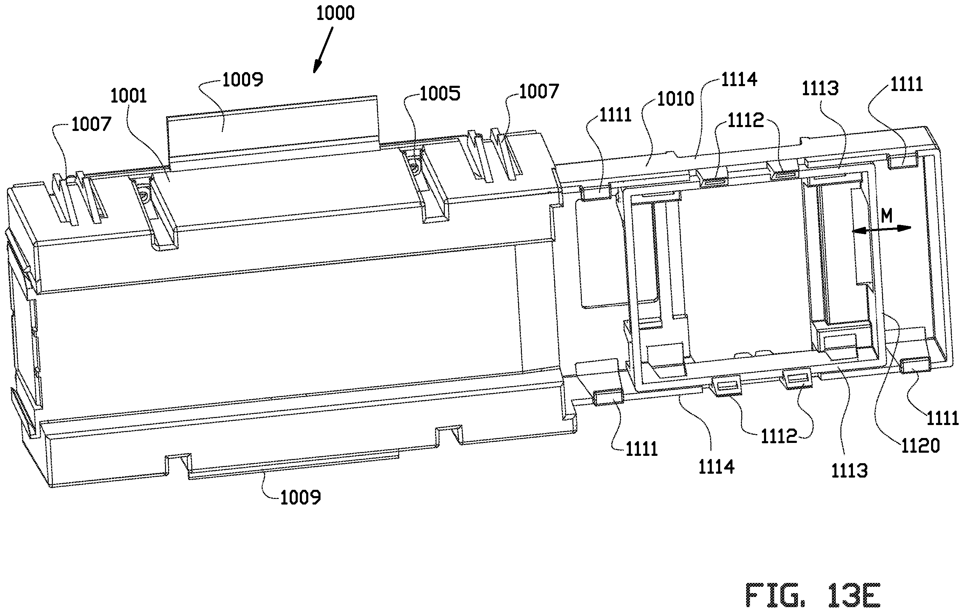

The wall channel box 1000 comprises a second elongated housing 1010 that is connected to the right side wall 1004 such that the inside of the second housing 1010 via a passage opening 1011 merges into the inside of the first housing 1001. The second housing comprises two elongated side walls 1114, a right side wall 1115, a left front wall member 1116 and a right front wall member 1117. The left front wall member 1116 is provided with a rectangular mounting opening 1118. The left front wall member 1116 and the right front wall member 1117 together leave a rectangular engagement opening 1119 free. As shown in figures 13D and 13E the second housing 1010 is open at the rear side. The elongated side wall members 1114 are each provided with two slide guides 1111 and between them two barbs 1112 that keep an insert frame 1120 confined in the second housing 1010 by engagement onto the parallel side walls 1113 of the insert frame 1120 such, that it is able to slide within the second housing 1010 in a guided manner only in direction M parallel to the slide direction K of the entire wall channel box 1000. In the insert frame 1120 the third connector 700 is secured by means of the short fastening ribs 730 that are inserted into long holes that are not shown of the insert frame 1120. The bottom connection 622 of the third connector 700 is thus accessible from the rear side, and in the intermediate position of the insert frame 1120 the top connection 721 is situated in front of the mounting opening 1118 and the engagement opening 1119 as shown.

The socket outlets 820 with conductors 80 having a singular core as shown in figure 7A are connected to the top connection 721 of the third connector 700. The wall channel box 1000 with the third connector and the already connected and pre-mounted socket outlets 820 form one pre-assembled unit to which in the work for instance the third flat cable 300 can be connected that has already been placed in the wall channel 940 and extends over its length. In that case the third flat cable 300 is locally lifted out of the wall channel 940 for by means of the pair of pincers 1200 being connected to the third connector 700. The lower jaw member 1202 that engages onto the engagement surface 681 for the pair of pincers that is situated at the outside, is able to move unimpeded in direction S until the cable holder 660 of the connector 700 has been brought in the permanent closing position. After squeezing the third connector 700 together it is no longer able to move with respect to the third flat cable 300. The engagement surface 681 for the pair of pincers and its notional continuation transverse to the longitudinal direction of the cable 300 also in the squeezed together position still extends freely above the edges of the insert frame 1120. In order to obtain some play when inserting the wall channel box 1000 in the wall channel 940, the first housing 1001 can by means of the slidable insert frame 1120 still be shifted in direction K with respect to the fixed third connector 700. In addition to ease of installation when inserting, it is thus also possible to adjust the wall channel box 1000 in direction K to the desired final position. In this way several wall channel boxes 1000 can be connected to the flat cable 300.

The above description is included to illustrate the operation of preferred embodiments of the invention and not to limit the scope of the invention as defined by the appended claims. Starting from the above explanation many variations that fall within the scope of the present invention as defined by the appended claims will be evident to an expert.

## Claims

1. Assembly comprising a cable (100; 200; 300; 400), a connector (700; 750) that engages onto the cable, a box (800; 950; 1000) for electric wirings that carries the connector, and a branching conductor (80) connected to the connector, wherein the cable comprises an outer jacket and adjacent to each other a first, a second and a third conductor (10, 20, 30) that extend within the outer jacket substantially parallel to each other and at substantially fixed mutual distances in a notional common straight plane (V), wherein the first, second and third conductor of the cable are each built up with an insulating sheath (12, 22, 32) of electrically insulating material in which a core (11, 21, 31) of electrically conductive material is accommodated, wherein the connector comprises a housing (623), electrical contacts (655) that cut through the jacket and a branch connection (724, 725, 726, 754) for the branching conductor, wherein the electrical contacts each cut through the outer jacket and the insulating sheaths of the first, second or third conductor and then are in electrically conductive contact with its core, wherein the branch connection is electrically conductively connected to at least one of the electrical contacts, wherein the connector is provided with a cable carrier (660) partially accommodated in the housing and the electrical contacts project from the housing in the direction of the cable carrier, wherein the box is provided with a circumferential wall (801; 952; 1002, 1003, 1004) and a bottom wall (802a, 802b; 954; 1006) that bound a first cavity for electric connections to which the branching conductor leads, wherein the box furthermore comprises a connector holder (910; 957; 1120) for the connector, wherein the connector holder is adapted and positioned for carrying the connector at the housing with the cable carrier in at least the first position accessible in a free or unimpeded manner to the cable from the outer side of the box, **characterized in that** the first, second and third conductor (10, 20, 30) of the cable (100, 200, 300, 400) are each built up with the insulating sheath (12, 22, 32) of electrically insulating material in which only one singular solid core (11, 21, 31) of electrically conductive material is accommodated, wherein the cable carrier (660) comprises a cable inlay part (661) that is provided with passage slits (674) that coincide with the cutting contacts (655) and wherein the cable carrier (660) is movable in a guided translatory manner (C) with respect to the housing (623) and the box (800, 950, 1000) carrying the housing between a first pre-determined position in which the electrical contacts (655) are spaced apart from the outer jacket, and a second pre-determined position in which the electrical contacts cut through the outer jacket and the insulating sheath (12, 22, 32).

2. Assembly according to claim 1, wherein the circumferential wall (801; 952; 1002, 1003, 1004) has an installation edge (804, 1008) for building up electric switch material on the box (800; 950; 1000), wherein the connector holder (910; 957; 1120) is positioned for carrying the connector (700; 750) at the rear side of the box that faces away from the installation edge.

3. Assembly according to claim 2, wherein on the installation edge (804; 1008) switch material is installed that is connected to the branching conductor (80).

4. Assembly according to claim 2 or 3, wherein with respect to the housing (623) the connector holder (910; 957; 1120) is positioned for carrying the connector (700; 750) with the cable holder so as to face away from the installation edge (804; 1008).

5. Assembly according to an one of the preceding claims, wherein with respect to the housing (623) the connector holder (910; 957; 1120) is positioned for carrying the connector (700; 750) with the branch connection so as to be oriented towards the first cavity or debouching therein.

6. Assembly according to any one of the preceding claims, wherein the connector holder (910; 957; 1120) is provided with a frame or box having a second cavity in which the connector (700; 750) is accommodated, wherein the second cavity merges into the first cavity and the branching conductor (80) extends through the first and second cavity.

7. Assembly according to any one of the preceding claims, wherein the cable carrier (660) at the side facing away from the housing (623) is provided with a substantially straight engagement surface (681) for a pair of pincers (1200) onto which one of two opposing jaw members (1201, 1202) of a pair of pincers can be placed that take the connector (700; 750) between them for squeezing the cable carrier from the first position to the second position, wherein in the first and second position the engagement surface for the pair of pincers and a notional straight continuation thereof extending transverse to the longitudinal direction (K) of the cable extend freely above the boundary of the connector holder.

8. Assembly according to any one of the preceding claims, wherein the box (800) is designed as a hollow-wall box, wherein the connector extends through an opening in the bottom wall (802a, 802b).

9. Assembly according to any one of the preceding claims, wherein the box (1000) is designed as wall channel box, wherein the assembly furthermore comprises a wall channel (940) in which the wall channel box is accommodated, wherein the connector (700) is positioned within the wall channel and the cable (300, 400) extends through the wall channel.

10. Assembly according to any one of the preceding claims, wherein the box (950) is designed as cable channel box, wherein the assembly further comprises a cable channel (900) to which the cable channel box is attached, wherein the cable channel comprises a bottom wall (901) and two side walls (902, 903) rising up from it, wherein the connector (700) is positioned straight above the bottom wall.

11. Assembly according to any of the preceding claims, wherein the branching conductor (80) is built up with an insulating sheath of electrically insulating material in which only one singular solid core of electrically conductive material is accommodated, wherein the branch connection comprises an insert contact (754) that is electrically conductively connected to at least one of the electrical contacts (655) and an insertion channel (724, 725, 726) leading to the insert contact, wherein the insertion channel is oriented for guided insertion of the branching conductor (80) to the insert contact in an insertion direction (F1-F5) parallel to the notional straight plane (V) of the cable (100; 200; 300; 400).

12. Assembly according to claim 11, wherein the insertion channel (724, 725, 726) is oriented for guided insertion of the branching conductor (80) with the insertion direction (F1-F5) parallel to the longitudinal direction of the cable (100; 200; 300; 400).

13. Assembly according to claim 11 or 12, wherein the housing comprises an outer wall (723) extending above the cable (100; 200; 300; 400) in which wall the insertion channel is defined, wherein the insertion channel (724, 725, 726) is preferably bounded by a slide (724, 725) that is partially recessed in the outer wall and open at the side facing away from the cable (100; 200; 300; 400), wherein the slide preferably has a cylindrical bottom shape.

14. Assembly according to claim 13, wherein the insertion channel (724, 725, 726) is bounded by a tunnel segment (726) partially extending above the outer wall (723) and defining a passage through the upper wall, wherein the tunnel segment (726) preferably has a cylindrical inner wall and/or upper wall.

15. Assembly according to claim 13 and 14, wherein in insertion direction (F1-F5) the tunnel segment (726) is situated behind the slide (724, 725), wherein the insertion direction (F1-F5) the tunnel segment (726) preferably runs into connection with the slide (724, 725).

## Patentansprüche

1. Anordnung, umfassend ein Kabel (100; 200; 300; 400), ein Verbindungsstück (700; 750), das auf dem Kabel einrastet, eine Box (800; 950; 1000) für elektrische Leitungen, die das Verbindungsstück trägt und einen verzweigenden Leiter (80), der mit dem Verbindungsstück verbunden ist, wobei das Kabel eine äußere Ummantelung und zueinander benachbart einen ersten, einen zweiten und einen dritten Leiter (10, 20, 30) umfasst, die sich innerhalb der äußeren Ummantelung im Wesentlichen parallel zueinander und mit im Wesentlichen festgelegten beiderseitigen Abständen in einer fiktiven, insgesamt ebenen Ebene (V) erstrecken, wobei der erste, zweite und dritte Leiter des Kabels jeweils mit einer isolierenden Hülle (12, 22, 32) eines elektrisch isolierenden Materials, in dem ein Kern (11, 21, 31) eines elektrisch leitfähigen Materials untergebracht ist, aufgebaut ist, wobei das Verbindungsstück ein Gehäuse (623), elektrische Kontakte (655), die durch die Ummantelung hindurch schneiden, und eine Verzweigungsverbindung (724, 725, 726, 754) für den verzweigenden Leiter umfasst, wobei die elektrischen Kontakte jeweils durch die äußere Ummantelung und die isolierenden Hüllen des ersten, zweiten und dritten Leiters hindurch schneiden und dann in einen elektrisch leitenden Kontakt mit deren Kern treten, wobei die Verzweigungsverbindung mit wenigstens einem der elektrischen Kontakte elektrisch leitend verbunden ist, wobei das Verbindungsstück mit einem Kabelträger (660) versehen ist, der teilweise in dem Gehäuse untergebracht ist und die elektrischen Kontakte aus dem Gehäuse in Richtung auf den Kabelträger hervorragen, wobei die Box mit einer umlaufenden Wand (801; 952; 1002, 1003, 1004) und einer unteren Wand (802a, 802b; 954; 1006) versehen ist, die eine erste Vertiefung für elektrische Verbindungen begrenzen, zu der der verzweigende Leiter führt, wobei die Box außerdem einen Verbindungsstückhalter (910; 957; 1120) für das Verbindungsstück umfasst, wobei der Verbindungsstückhalter so angepasst und positioniert ist, dass er das Verbindungsstück an dem Gehäuse mit dem Kabelträger in wenigstens der ersten Position für das Kabel von der äußeren Seite der Box frei und ungehindert zugänglich hält, dadurch charakterisiert, dass der erste, zweite und dritte Leiter (10, 20, 30) des Kabels (100, 200, 300, 400) jeweils mit der isolierenden Hülle (12, 22, 32) aus elektrisch isolierendem Material, in der nur ein einzelner fester Kern (11, 21, 31) aus elektrisch leitfähigem Material untergebracht ist, ausgebildet ist, wobei der Kabelträger (660) ein Kabeleinlegestück (661) umfasst, das mit Durchtrittsschlitzen (674) versehen ist, die mit den Schneidkontakten (655) übereinstimmen, und wobei der Kabelträger (660) in einer geführten translatorischen Weise (C) in Bezug auf das Gehäuse (623) und die Box (800, 950, 1000) die das Gehäuse trägt, zwischen einer ersten vorbestimmten Position, in der die elektrischen Kontakte (655) von der äußern Ummantelung beabstandet sind, und einer zweiten vorbestimmten Position, in der die elektrischen Kontakte durch die äußere Ummantelung und die isolierende Hülle (12, 22, 32) schneiden, beweglich ist.

2. Anordnung gemäß Anspruch 1, wobei die umlaufende Wand (801; 952; 1002, 1003, 1004) eine Einbaukante (804, 1008) zum Aufbringen eines elektrischen Schaltermaterials an der Box (800; 950; 1000) aufweist, wobei der Verbindungsstückhalter (910; 957; 1120) so angeordnet ist, dass er das Verbindungsstück (700; 750) an der hinteren Seite der Box, die von der Einbaukante wegzeigt, trägt.

3. Anordnung gemäß Anspruch 2, wobei an der Einbaukante (804; 1008) ein Schaltermaterial eingebaut ist, dass mit dem verzweigenden Leiter (80) verbunden ist.

4. Anordnung gemäß Anspruch 2 oder 3, wobei in Bezug auf das Gehäuse (623) der Verbindungsstückhalter (910; 957; 1120) so angeordnet ist, dass er das Verbindungsstück (700; 750) mit dem Kabelhalter so trägt, dass er von der Einbaukante (804; 1008) wegzeigt.

5. Anordnung gemäß einem der vorhergehenden Ansprüche, wobei in Bezug auf das Gehäuse (623) der Verbindungsstückhalter (910; 957; 1120) so angeordnet ist, dass er das Verbindungsstück (700; 750) mit der verzweigenden Verbindung so trägt, dass sie in Richtung auf die erste Kavität ausgerichtet ist, oder dort hineinführt.

6. Anordnung gemäß einem der vorhergehenden Ansprüche, wobei der Verbindungsstückhalter (910; 957; 1120) mit einem Rahmen oder einem Kästchen ausgestattet ist, der/das eine zweite Vertiefung aufweist, in der das Verbindungsstück (700; 750) untergebracht ist, wobei die zweite Vertiefung in die erste Vertiefung hinein passt und sich der verzweigende Leiter (80), durch die erste und die zweite Vertiefung erstreckt.

7. Anordnung gemäß einem der vorhergehenden Ansprüche, wobei der Kabelträger (660) auf der Seite, die von dem Gehäuse (623) wegzeigt, mit einer im Wesentlichen ebenen Eingriffsfläche (681) für ein Paar von Greifern (1200) versehen ist, auf die eine von zwei sich gegenüber liegenden Klemmstücken (1201, 1202) eines Paares von Greifern angebracht werden kann, die das Verbindungsstück (700; 750) zwischen sich nehmen können, um den Kabelträger von der ersten Position zu der zweiten Position zu drücken, wobei sich die Eingriffsfläche für das Paar von Greifern und eine imaginäre gerade Verlängerung davon, die sich quer zu der Längsrichtung (K) des Kabels erstreckt, in der ersten und der zweiten Position frei oberhalb der Grenze des Verbindungsstückhalters erstreckt.

8. Anordnung gemäß einem der vorhergehenden Ansprüche, wobei die Box (800) als eine Hohlwandbox ausgestaltet ist, wobei sich das Verbindungsstück durch eine Öffnung in der unteren Wand (802a, 802b) erstreckt.

9. Anordnung gemäß einem der vorhergehenden Ansprüche, wobei die Box (1000) als Wandkanalbox ausgestaltet ist, wobei die Anordnung außerdem ein Wandkanal (940) umfasst, in dem die Wandkanalbox untergebracht ist, wobei das Verbindungsstück (700) innerhalb des Wandkanals angeordnet ist und sich das Kabel (300, 400) durch den Wandkanal erstreckt.

10. Anordnung gemäß einem der vorhergehenden Ansprüche, wobei die Box (950) als Kabelkanalbox ausgestaltet ist, wobei die Anordnung außerdem einen Kabelkanal (900) umfasst, an den die Kabelkanalbox angebracht ist, wobei der Kabelkanal eine untere Wand (901) und zwei Seitenwände (902, 903), die von dieser aufragen, umfasst, wobei das Verbindungsstück (700) direkt oberhalb der unteren Wand angeordnet ist.

11. Anordnung gemäß einem der vorhergehenden Ansprüche, wobei der verzweigende Leiter (80) mit einer isolierenden Hülle eines elektrisch isolierenden Materials, in der nur ein einzelner fester Kern eines elektrisch leitfähigen Materials untergebracht ist, ausgebildet ist, wobei die verzweigende Verbindung einen Steckkontakt (754) umfasst, der mit wenigstens einem der elektrischen Kontakte (655) elektrisch leitend verbunden ist, und einen Einführkanal (724, 725, 726), der zur dem Steckkontakt führt, wobei der Einführkanal für das geführte Einbringen des verzweigenden Leiters (80) zu dem Steckkontakt in einer Einführrichtung (F1-F5) parallel zu der imaginären geraden Ebene (V) des Kabels (100; 200; 300;400) ausgerichtet ist.

12. Anordnung gemäß Anspruch 11, wobei der Einführkanal (724, 725, 726) für das geführte Einbringen des verzweigenden Leiters (80) ausgerichtet ist, wobei die Einführrichtung (F1-F5) parallel zu der Längsrichtung des Kabels (100; 200; 300; 400) liegt.

13. Anordnung gemäß Anspruch 11 oder 12, wobei das Gehäuse eine äußere Wand (723) umfasst, die sich oberhalb des Kabels (100; 200; 300; 400) erstreckt, wobei der Einführkanal in dieser Wand liegt, wobei der Einführkanal (724, 725, 726) bevorzugt von einer Gleitschiene (724, 725) begrenzt ist, die teilweise in der äußeren Wand eingelassen ist und zu der Seite, die von dem Kabel (100; 200; 300; 400) wegweist offen ist, wobei die Gleitschiene bevorzugt eine zylindrische Bodenform hat.

14. Anordnung gemäß Anspruch 13, wobei der Einführkanal (724, 725, 726) von einem Tunnelsegment (726) begrenzt ist, das teilweise über die äußere Wand (723) hinaus ragt und eine Durchtrittsstelle durch die obere Wand darstellt, wobei das Tunnelsegment (726) bevorzugt eine zylindrische innere und/oder obere Wand aufweist.

15. Anordnung gemäß Anspruch 13 und 14, wobei in Einführungsrichtung (F1-F5) das Tunnelsegment (726) hinter der Gleitschiene (724, 725) angeordnet ist, wobei die Einführungsrichtung (F1-F5) das Tunnelsegment (726) bevorzugt in Verbindung mit der Gleitschiene (724, 725) setzt.

## Revendications

1. Ensemble comprenant un câble (100 ; 200 ; 300 ; 400), un connecteur (700 ; 750) qui s'enclenche sur le câble, une boîte (800 ; 950 ; 1000) pour câblages électriques qui porte le connecteur, et un conducteur de branchement (80) raccordé au connecteur, dans lequel le câble comprend une chemise externe et adjacents entre eux un premier, un deuxième et un troisième conducteur (10, 20, 30) qui s'étendent à l'intérieur de la chemise externe sensiblement parallèlement entre eux et à des distances mutuelles sensiblement fixes dans un plan droit fictif commun (V), dans lequel les premier, deuxième et troisième conducteurs du câble sont chacun montés avec une gaine isolante (12, 22, 32) en matériau électriquement isolant dans laquelle une âme (11, 21, 31) en matériau électriquement conducteur est logée, dans lequel le connecteur comprend un boîtier (623), des contacts électriques (655) qui traversent la chemise et un raccord de branchement (724, 725, 726, 754) pour le conducteur de branchement, dans lequel les contacts électriques traversent chacun la chemise externe et les gaines isolantes des premier, deuxième ou troisième conducteurs et ensuite sont en contact électriquement conducteur avec leur âme, dans lequel le raccord de branchement est raccordé de manière électriquement conductrice à au moins l'un des contacts électriques, dans lequel le connecteur est prévu avec un support de câble (660) partiellement logé dans le boîtier et les contacts électriques font saillie du boîtier dans la direction du support de câble, dans lequel la boîte est prévue avec une paroi circonférentielle (801 ; 952 ; 1002 ; 1003, 1004) et une paroi inférieure (802a, 802b ; 954 ; 1006) qui délimitent une première cavité pour raccordements électriques à laquelle mène le conducteur de branchement, dans lequel la boîte comprend en outre un support de connecteur (910 ; 957 ; 1120) pour le connecteur, dans lequel le support de connecteur est adapté et positionné pour porter le connecteur au niveau du boîtier avec le support de câble dans au moins la première position accessible d'une manière libre ou non gênée jusqu'au câble à partir du côté externe de la boîte, **caractérisé en ce que** les premier, deuxième et troisième conducteurs (10, 20, 30) du câble (100, 200, 300, 400) sont chacun montés avec la gaine isolante (12, 22, 32) en matériau électriquement isolant, dans laquelle une seule âme pleine singulière (11, 21, 31) en matériau électriquement conducteur est logée, dans lequel le support de câble (660) comprend une partie d'incrustation de câble (661) qui est prévue avec des fentes de passage (674) qui coïncident avec les contacts de coupe (655) et dans lequel le support de câble (660) est mobile en translation guidée (C) par rapport au boîtier (623) et à la boîte (800, 950, 1000) transportant le boîtier entre une première position prédéterminée dans laquelle les contacts électriques (655) sont espacés de la chemise externe, et une seconde position prédéterminée dans laquelle les contacts électriques traversent la chemise externe et la gaine isolante (12, 22, 32).

2. Ensemble selon la revendication 1, dans lequel la paroi circonférentielle (801 ; 952 ; 1002, 1003, 1004) a un bord d'installation (804, 1008) pour monter un matériel de commutation électrique sur la boîte (800 ; 950 ; 1000), dans lequel le support de connecteur (910 ; 957 ; 1120) est positionné pour porter le connecteur (700 ; 750) du côté arrière de la boîte qui est orienté à l'opposé du bord d'installation.

3. Ensemble selon la revendication 2, dans lequel sur le bord d'installation (804 ; 1008) un matériel de commutation est installé qui est raccordé au conducteur de branchement (80).

4. Ensemble selon la revendication 2 ou 3, dans lequel par rapport au boîtier (623), le support de connecteur (910 ; 957 ; 1120) est positionné pour porter le connecteur (700 ; 750) avec le support de câble afin d'être orienté à l'opposé du bord d'installation (804 ; 1008).

5. Ensemble selon l'une des revendications précédentes, dans lequel, par rapport au boîtier (623), le support de connecteur (910 ; 957 ; 1120) est positionné pour porter le connecteur (700 ; 750) avec le raccord de branchement afin d'être orienté vers la première cavité ou de déboucher à l'intérieur de cette dernière.

6. Ensemble selon l'une quelconque des revendications précédentes, dans lequel le support de connecteur (910 ; 957 ; 1120) est prévu avec un cadre ou boîte ayant une seconde cavité dans laquelle le connecteur (700 ; 750) est logé, dans lequel la seconde cavité fusionne dans la première cavité et le conducteur de branchement (80) s'étend à travers les première et seconde cavités.

7. Ensemble selon l'une quelconque des revendications précédentes, dans lequel le support de câble (660) du côté orienté à l'opposé du boîtier (623) est prévu avec une surface de mise en prise sensiblement droite (681) pour qu'une paire de tenailles (1200), sur laquelle l'un des deux éléments de mâchoire (1201, 1202) opposés d'une paire de tenailles peut être placé, prennent le connecteur (700 ; 750) entre elles afin de comprimer le support de câble de la première position à la seconde position, dans lequel, dans les première et seconde positions, la surface de mise en prise pour la paire de tenailles et sa continuité fictive droite, s'étendant transversalement à la direction longitudinale (K) du câble, s'étendent librement au-dessus de la limite du support de connecteur.

8. Ensemble selon l'une quelconque des revendications précédentes, dans lequel la boîte (800) est conçue comme une boîte à paroi creuse, dans lequel le connecteur s'étend à travers une ouverture dans la paroi inférieure (802a, 802b).

9. Ensemble selon l'une quelconque des revendications précédentes, dans lequel la boîte (1000) est conçue comme une boîte de canal de paroi, dans lequel l'ensemble comprend en outre un canal de paroi (940) dans lequel la boîte de canal de paroi est logée, dans lequel le connecteur (700) est positionné à l'intérieur du canal de paroi et le câble (300, 400) s'étend à travers le canal de paroi.

10. Ensemble selon l'une quelconque des revendications précédentes, dans lequel la boîte (950) est conçue comme une boîte de canal de câble, dans lequel l'ensemble comprend en outre un canal de câble (900) auquel la boîte de canal de câble est fixée, dans lequel le canal de câble comprend une paroi inférieure (901) et deux parois latérales (902, 903) remontant à partir de cette dernière, dans lequel le connecteur (700) est positionné droit au-dessus de la paroi inférieure.

11. Ensemble selon l'une quelconque des revendications précédentes, dans lequel le conducteur de branchement (80) est monté avec une gaine isolante en matériau électriquement isolant dans laquelle une seule âme pleine singulière en matériau électriquement conducteur est logée, dans lequel le raccord de branchement comprend un contact d'insert (754) qui est raccordé de manière électriquement conductrice à au moins l'un des contacts électriques (655) et un canal d'insertion (724, 725, 726) menant au contact d'insert, dans lequel le canal d'insertion est orienté pour insertion guidée du conducteur de branchement (80) vers le contact d'insert dans une direction d'insertion (F1-F5) parallèle au plan fictif droit (V) du câble (100 ; 200 ; 300 ; 400).

12. Ensemble selon la revendication 11, dans lequel le canal d'insertion (724, 725, 726) est orienté pour insertion guidée du conducteur de branchement (80) avec la direction d'insertion (F1-F5) parallèlement à la direction longitudinale du câble (100 ; 200 ; 300 ; 400).

13. Ensemble selon la revendication 11 ou 12, dans lequel le boîtier comprend une paroi externe (723) s'étendant au-dessus du câble (100 ; 200 ; 300 ; 400), dans laquelle paroi le canal d'insertion est défini, dans lequel le canal d'insertion (724, 725, 726) est de préférence délimité par une glissière (724, 725) qui est partiellement enfoncée dans la paroi externe et ouverte sur le côté orienté à l'opposé du câble (100 ; 200 ; 300 ; 400), dans lequel la glissière a de préférence une forme de fond cylindrique.

14. Ensemble selon la revendication 13, dans lequel le canal d'insertion (724, 725, 726) est délimité par un segment de tunnel (726) s'étendant partiellement au-dessus de la paroi externe (723) et définissant un passage à travers la paroi supérieure, dans lequel le segment de tunnel (726) a de préférence une paroi interne cylindrique et/ou une paroi supérieure cylindrique.

15. Ensemble selon la revendication 13 et 14, dans lequel, dans la direction d'insertion (F1-F5), le segment de tunnel (726) est situé derrière la glissière (724, 725), dans lequel dans la direction d'insertion (F1-F5), le segment de tunnel (726) s'étend de préférence en raccordement avec la glissière (724, 725).
